(19) Europäisches Patentamt
European Patent Office
Office européen des brevets

(11) **EP 4 783 587 A1**

(12) **EUROPEAN PATENT APPLICATION**
published in accordance with Art. 153(4) EPC

(43) Date of publication:
**29.07.2026 Bulletin 2026/31**

(51) International Patent Classification (IPC):
**H04N 21/234** (2011.01)     **H04N 19/00** (2014.01)

(21) Application number: **24870398.5**

(52) Cooperative Patent Classification (CPC):
**H04N 19/00; H04N 21/234; H04N 21/2343;
H04N 21/44; H04N 21/4402**

(22) Date of filing: **05.09.2024**

(86) International application number:
**PCT/CN2024/117241**

(87) International publication number:
**WO 2025/066852 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023  CN 202311292210**

(71) Applicant: **HUAWEI TECHNOLOGIES CO., LTD.
Shenzhen 518129 (CN)**

(72) Inventors:
• **LI, Meng
  Shenzhen, Guangdong 518129 (CN)**
• **WANG, Jing
  Shenzhen, Guangdong 518129 (CN)**
• **SHI, Yibo
  Shenzhen, Guangdong 518129 (CN)**

(74) Representative: **Eisenführ Speiser
Patentanwälte Rechtsanwälte PartGmbB
Johannes-Brahms-Platz 1
20355 Hamburg (DE)**

(54) **IMAGE DECODING METHOD AND APPARATUS**

(57)    Embodiments of this application provide a method and an apparatus for decoding an image. The method includes: first receiving a bitstream; then obtaining first image information based on the bitstream; performing feature transformation on the first image information, to obtain a feature of the first image information; then inputting second image information to a diffusion model, to obtain a target feature, where the feature of the first image information is used to adjust an intermediate feature generated in a process in which the diffusion model performs feature generation processing, and the second image information includes one of a preset noise image, an initial reconstructed image determined based on the bitstream, or an image obtained through noise addition based on the initial reconstructed image; and next, performing reconstruction processing on the target feature, to obtain a target reconstructed image. This can enhance subjective quality of the reconstructed image.

FIG. 3A

EP 4 783 587 A1

## Description

This application claims priority to Chinese Patent Application No. 202311292210.8, filed with the China National Intellectual Property Administration on September 28, 2023 and entitled "METHOD AND APPARATUS FOR DECODING IMAGE", which is incorporated herein by reference in its entirety.

## TECHNICAL FIELD

Embodiments of this application relate to the field of encoding and decoding, and in particular, to a method and an apparatus for decoding an image.

## BACKGROUND

As videos develop from high definition to ultra-high definition, people have increasingly high requirements on video quality. In addition, high-definition videos have increasingly high demands for bandwidth and storage. Correspondingly, in consideration of cost control on bandwidth, transmission delays, and storage, a demand for video coding, namely, video processing, is increasingly urgent.

An artificial intelligence (Artificial Intelligence, AI) video compression (or referred to as encoding and decoding) algorithm is implemented based on deep learning (for example, based on a variational auto-encoder (Variational Auto-Encoder, VAE)), and exhibits better compression effect than a conventional video compression technology (for example, H.265 or H.266).

However, a VAE-based image compression solution also has drawbacks. To be specific, a reconstructed image obtained through decoding is blurred or has pseudo texture, resulting in poor subjective quality of the reconstructed image.

## SUMMARY

In view of this, this application provides a method and an apparatus for decoding an image. The method for decoding the image can enhance subjective quality of a reconstructed image.

According to a first aspect, an embodiment of this application provides a decoding method. The decoding method includes: first receiving a bitstream; then obtaining first image information based on the bitstream; performing feature transformation on the first image information, to obtain a feature of the first image information; then inputting second image information to a diffusion model, to obtain a target feature, where the feature of the first image information is used to adjust an intermediate feature generated in a process in which the diffusion model performs feature generation processing, and the second image information includes one of a preset noise image, an initial reconstructed image determined based on the bitstream, or an image obtained through noise addition based on the initial reconstructed image; and next, performing reconstruction processing on the target feature, to obtain a target reconstructed image.

First, in some conventional technology, a feature map of an image obtained from a bitstream through entropy decoding is directly input to an image decoder for decoding, to obtain a reconstructed image. In this application, a feature of first image information (including a feature map of an image) obtained from a bitstream is first determined, then a diffusion model is used to perform feature generation processing on second image information, to obtain a target feature, the feature of the first image information is used to adjust an intermediate feature generated in a process in which the diffusion model performs feature generation processing, and then a decoder (the decoder is different from the image decoder) is used to perform reconstruction processing on the target feature, to obtain a reconstructed image (that is, a target reconstructed image). Because the diffusion model learns common image information (for example, texture information) in a training process, the diffusion model has a stronger generation capability than the image decoder in the conventional technology. Therefore, the diffusion model requires less information in the process of performing feature generation processing. Further, in a case of same subjective quality, less information is carried in the bitstream in this application. In other words, in a case of a same bitstream size, subjective quality of the reconstructed image obtained by using the decoding method in this application is better.

Second, in some conventional technology, an initial reconstructed image is used as a control condition for adjusting an intermediate feature generated in a process in which a diffusion model performs feature generation processing. In other words, the diffusion model in the conventional technology operates in an image domain. In this application, the feature of the first image information is used as a control condition for adjusting the intermediate feature generated in the process in which the diffusion model performs feature generation processing. In other words, the diffusion model in this application operates in a feature domain. Because a scale in the feature domain is less than a scale in the image domain, this application can reduce complexity of calculation of the diffusion model, to improve efficiency of a decoding process (the scale is scale, and may be understood as a size, and features of a plurality of scales may be obtained by performing downsampling with a plurality of factors on one image).

Third, in the field of image super-resolution, in some conventional technology, a stable diffusion (Stable Diffusion, SD) model is used for super resolution. The stable diffusion model may include a time-aware feature transformer (Time-Aware Feature Transformer, TAFT) network, a spatial feature transformation (spatial feature transformation, SFT) network, a U-NET, an encoder (Encoder), and a decoder (Decoder). In a super-resolution process, a low-resolution image is input to the encoder, to obtain a first feature; then the first feature is input to the TAFT, to obtain a second feature; then the second feature and a preset noise image are input to a generation model (including the U-NET and the SFT), to obtain a third feature; and next, the third feature is input to the decoder, to obtain a high-resolution image. First, in the conventional technology, the image is input to the encoder, and then the feature output by the encoder is input to the TAFT. In this application, in the decoding process, the feature of the first image information is determined after the first image information is obtained from the bitstream (for example, the first image information may be input to a first feature transformation model, such as a TAFT). In other words, the encoder is not used in the decoding process in this application. Second, in the conventional technology, the first feature and the third feature belong to a same domain (that is, dimensions of the first feature are the same as dimensions of the third feature, and each dimension has a same physical meaning; for example, the dimensions of the first feature are m1*m2, and the dimensions of the third feature are m1*m2, where m1 and m2 are positive integers). In other words, the first feature matches the decoder. In other words, a reconstructed image may be obtained by inputting only the first feature to the decoder. In this application, the feature of the first image information and the target feature belong to different domains (that is, dimensions of the feature of the first image information are different from dimensions of the target feature, and each dimension has a different physical meaning; for example, the dimensions of the feature of the first image information are m3*m4, and the dimensions of the target feature are m5*m6, where m3 to m6 are positive integers, and m3 is not equal to m5 or m4 is not equal to m6). In other words, the feature of the first image information does not match the decoder. In other words, a reconstructed image cannot be obtained by inputting only the feature of the first image information to the decoder.

For example, the diffusion model is a model used to generate an image/a feature, and may be implemented by a neural network. For example, the diffusion model may include a convolutional layer. In a possible manner, the diffusion model may include at least one convolutional layer and at least one activation layer. In a possible manner, the diffusion model may include at least one convolutional layer and at least one normalization layer. In a possible manner, the diffusion model may include at least one convolutional layer, at least one activation layer, and at least one normalization layer. For example, a network structure used in a denoising process (or a feature generation processing process) of the diffusion model may be a U-NET or another network structure. It should be understood that a network structure of the diffusion model is not limited in this application.

For example, the intermediate feature generated in the process in which the diffusion model performs feature generation processing may be a feature output by an input layer and a feature output by an intermediate layer included in the diffusion model during processing.

For example, the preset noise image may be obtained by sampling Gaussian noise.

For example, the first image information may be at least one of an image or a feature.

It should be noted that, the second image information may be understood as input information of the diffusion model, and the feature of the first image information may be understood as control information of the diffusion model.

It should be noted that the decoding method in this application may be used to decode an image/a video.

According to the first aspect, performing reconstruction processing on the target feature, to obtain the target reconstructed image includes: performing reconstruction processing on the first image information and the target feature, to obtain the target reconstructed image.

Because both determining the feature of the first image information and the process in which the diffusion model performs feature generation processing introduce an error and weaken an original feature and a detail feature included in the first image information, the first image information is more accurate than the target feature. Further, reconstruction processing is performed on the first image information determined based on the bitstream and the target feature, so that a balance between detail richness and fidelity of the target reconstructed image can be achieved.

According to the first aspect or any one of the foregoing implementations of the first aspect, performing reconstruction processing on the first image information and the target feature, to obtain the target reconstructed image includes: inputting the first image information and the target feature to a first decoding network, to obtain the target reconstructed image.

The first decoding network may be implemented by a neural network, and the first decoding network may be a decoder. In other words, in this application, AI reconstruction is performed on the first image information and the target feature. In comparison with a conventional reconstruction method, this application can enhance subjective quality of the target reconstructed image obtained through decoding.

According to the first aspect or any one of the foregoing implementations of the first aspect, performing feature transformation on the first image information, to obtain the feature of the first image information includes: inputting the first image information and time information to a first feature transformation model, to obtain the feature of the first image information.

The first feature transformation model may be a model used to perform feature transformation. The first feature transformation model may be implemented by a neural network, and may include a plurality of convolutional layers. For example, the first feature transformation model is a TAFT. In this way, the AI network is used to perform feature transformation, so that accuracy of the obtained feature of the first image information can be enhanced, and further, subjective quality of the target reconstructed image can be enhanced.

In addition, the diffusion model performs denoising step by step. In other words, a denoising process of the diffusion model is associated with time. Therefore, inputting the time information to the first feature transformation model enables the first feature transformation model to sense a time change and generate features of the first image information corresponding to different time information, to provide more accurate guidance for feature adjustment and enhance accuracy of the target feature, so as to enhance subjective quality of the target reconstructed image.

According to the first aspect or any one of the foregoing implementations of the first aspect, the feature of the first image information corresponds to a plurality of pieces of time information, one of the plurality of pieces of time information corresponds to one feature or a plurality of features of the first image information, and the plurality of features of the first image information have different scales.

According to the first aspect or any one of the foregoing implementations of the first aspect, inputting the second image information to the diffusion model, to obtain the target feature includes: inputting a $t^{th}$ piece of time information and the second image information to the diffusion model, to obtain a feature of a $(t-1)^{th}$ piece of time information, where an initial value of t is T, and T is a positive integer; and subtracting 1 from t, and cyclically performing the following steps until t is equal to 1: inputting the $t^{th}$ piece of time information and a feature of the $t^{th}$ piece of time information to the diffusion model, to obtain the feature of the $(t-1)^{th}$ piece of time information, and subtracting 1 from t. The feature of the first image information corresponds to the plurality of pieces of time information, a feature of the first image information corresponding to the $t^{th}$ piece of time information is used to adjust an intermediate feature generated in a process in which the diffusion model generates the feature of the $(t-1)^{th}$ piece of time information, and when t is equal to 1, the feature of the $(t-1)^{th}$ piece of time information is the target feature.

A value of t in the $t^{th}$ piece of time information varies in different cycles.

According to the first aspect or any one of the foregoing implementations of the first aspect, the method further includes: inputting the feature of the first image information to a second feature transformation model, to obtain a feature adjustment parameter; and adjusting, based on the feature adjustment parameter, the intermediate feature generated in the process in which the diffusion model performs feature generation processing.

For example, the second feature transformation model may be a model used to perform feature transformation. The second feature transformation model may be implemented by a neural network, the second feature transformation module may include a plurality of blocks (blocks), and each block may include at least one convolutional layer. For example, the second feature model may be an SFT. In this way, the feature of the first image information may be converted into a feature adjustment parameter that can be used to directly adjust the intermediate feature generated in the process in which the diffusion model performs feature generation processing.

According to the first aspect or any one of the foregoing implementations of the first aspect, the feature adjustment parameter includes a first feature adjustment parameter and a second feature adjustment parameter, and adjusting, based on the feature adjustment parameter, the intermediate feature generated in the process in which the diffusion model performs feature generation processing includes: determining a product of the first feature adjustment parameter and the intermediate feature generated in the process in which the diffusion model performs feature generation processing; determining a sum of the product and the second feature adjustment parameter; and determining an adjusted intermediate feature based on the sum.

According to the first aspect or any one of the foregoing implementations of the first aspect, determining the adjusted intermediate feature based on the sum includes: adding the sum to the intermediate feature generated in the process in which the diffusion model performs feature generation processing, to obtain the adjusted intermediate feature.

After feature adjustment is performed on the intermediate feature generated in the process in which the diffusion model performs feature generation processing, an original feature and a detail feature included in the intermediate feature generated in the process in which the diffusion model performs feature generation processing are weakened. Therefore, adding the intermediate feature before adjustment to the adjusted intermediate feature can add the original feature and the detail feature included in the intermediate feature before adjustment to the adjusted intermediate feature. This can ensure accuracy of a feature input to a next network layer of the diffusion model, so that accuracy of the obtained feature of the $(t-1)^{th}$ piece of time information can be enhanced, to enhance subjective quality of the target reconstructed image.

According to the first aspect or any one of the foregoing implementations of the first aspect, the first image information includes at least one of a feature map of an image, a side information feature of the image, the initial reconstructed image, or a decoding feature of the initial reconstructed image. The feature map of the image and the side information feature of the image are obtained by an entropy decoding unit by performing entropy decoding on the bitstream, the initial reconstructed image is obtained by a second decoding network by decoding the feature map of the image, and the decoding feature of the initial reconstructed image is a feature generated in a process in which the second decoding network decodes the feature map of the image.

It should be noted that the first image information on which reconstruction processing is performed with the target feature to obtain the target reconstructed image may include at least one of the feature map of the image, the side information feature of the image, or the decoding feature of the initial reconstructed image.

According to the first aspect or any one of the foregoing implementations of the first aspect, the bitstream includes a first bitstream and a second bitstream, and obtaining the first image information based on the bitstream includes:

inputting the first bitstream to the entropy decoding unit, to obtain the side information feature of the image, and using the side information feature of the image as the first image information; and/or

inputting the first bitstream to the entropy decoding unit, to obtain the side information feature of the image, inputting the side information feature of the image and the second bitstream to the entropy decoding unit, to obtain the feature map of the image, and using the feature map of the image as the first image information; and/or

inputting the first bitstream to the entropy decoding unit, to obtain the side information feature of the image, inputting the side information feature of the image and the second bitstream to the entropy decoding unit, to obtain the feature map of the image, inputting the feature map of the image to the second decoding network, to obtain the initial reconstructed image and/or the decoding feature of the initial reconstructed image, and using the initial reconstructed image and/or the decoding feature of the initial reconstructed image as the first image information.

For example, after the side information feature of the image is obtained, a probability distribution of the feature map of the image may be determined based on the side information feature of the image. Then, entropy decoding is performed on the second bitstream according to the probability distribution of the feature map of the image, to obtain the feature map of the image. The probability distribution of the feature map of the image may be a parameter of a Gaussian distribution, such as a mean and a variance.

According to a second aspect, an embodiment of this application provides an apparatus for decoding an image. The apparatus for decoding the image includes an entropy decoding unit, a first feature transformation model, a diffusion model, and a first decoding network.

The entropy decoding unit is configured to perform entropy decoding on a received bitstream, to obtain first image information.

The first feature transformation model is configured to perform feature transformation on the first image information, to obtain a feature of the first image information.

The diffusion model is configured to perform feature generation processing on second image information, to obtain a target feature, where the feature of the first image information is used to adjust an intermediate feature generated in a process in which the diffusion model performs feature generation processing, and the second image information includes one of a preset noise image, an initial reconstructed image determined based on the bitstream, or an image obtained through noise addition based on the initial reconstructed image.

The first decoding network is configured to perform reconstruction processing on the target feature, to obtain a target reconstructed image.

According to the second aspect, the first decoding network is specifically configured to perform reconstruction processing on the first image information and the target feature, to obtain the target reconstructed image.

According to the second aspect or any one of the foregoing implementations of the second aspect, the apparatus for decoding the image further includes a second feature transformation model.

The second feature transformation model is configured to perform feature transformation on the feature of the first image information, to obtain a feature adjustment parameter, where the feature adjustment parameter is used to adjust the intermediate feature generated in the process in which the diffusion model performs feature generation processing.

According to the second aspect or any one of the foregoing implementations of the second aspect, the first image information includes at least one of a feature map of the image or a side information feature of the image, and the feature map of the image or the side information feature of the image is output information of the entropy decoding unit.

According to the second aspect or any one of the foregoing implementations of the second aspect, the apparatus for decoding the image further includes a second decoding network.

The second decoding network is configured to decode a feature map of the image.

The feature map of the image is output information of the entropy decoding unit, the first image information includes at least one of the initial reconstructed image and a decoding feature of the initial reconstructed image, the initial reconstructed image is output information of the second decoding network, and the decoding feature of the initial reconstructed image is a feature generated in a process in which the second decoding network decodes the feature map of the image.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, this application provides an apparatus for decoding an image. The apparatus for decoding the image includes:

a receiving module, configured to receive a bitstream;

an information obtaining module, configured to obtain first image information based on the bitstream;

a feature determining module, configured to perform feature transformation on the first image information, to obtain a feature of the first image information;

a feature generation module, configured to input second image information to a diffusion model, to obtain a target feature, where the feature of the first image information is used to adjust an intermediate feature generated in a process in which the diffusion model performs feature generation processing, and the second image information includes one of a preset noise image, an initial reconstructed image determined based on the bitstream, or an image obtained through noise addition based on the initial reconstructed image; and

a reconstruction module, configured to perform reconstruction processing on the target feature, to obtain a target reconstructed image.

It should be understood that the decoding apparatus may be configured to perform the decoding method in the first aspect or any one of the possible implementations of the first aspect.

The third aspect and any one of the implementations of the third aspect respectively correspond to the first aspect and any one of the implementations of the first aspect. For technical effects corresponding to the third aspect and any one of the implementations of the third aspect, refer to technical effects corresponding to the first aspect and any one of the implementations of the first aspect. Details are not described herein again.

According to a fourth aspect, this application provides an encoding method. The encoding method includes: obtaining an image; performing feature extraction on the image, to obtain a feature map of the image; and performing entropy encoding on the image, to obtain a bitstream.

The bitstream may correspond to the second bitstream in the first aspect or any one of the foregoing implementations of the first aspect.

According to the fourth aspect, the method further includes: performing probability estimation on the feature map of the image, to obtain a probability distribution of the feature map of the image. Performing entropy encoding on the image, to obtain the bitstream includes: performing entropy encoding on the feature map of the image according to the probability distribution of the feature map of the image, to obtain the bitstream.

According to the fourth aspect or any one of the foregoing implementations of the fourth aspect, performing probability estimation on the feature map of the image, to obtain the probability distribution of the feature map of the image includes: performing feature extraction on the feature map of the image, to obtain a side information feature of the image; and determining the probability distribution of the feature map of the image based on the side information feature of the image.

According to the fourth aspect or any one of the foregoing implementations of the fourth aspect, the method further includes: performing entropy encoding on the side information feature of the image. In this case, the first bitstream in the first aspect or any one of the foregoing implementations of the first aspect may be obtained.

According to a fifth aspect, an embodiment of this application provides a decoding apparatus, including a memory and a processor. The memory is coupled to the processor. The memory stores program instructions. When the program instructions are executed by the processor, an electronic device is enabled to perform the method for decoding the image in the first aspect or any one of the possible implementations of the first aspect.

The fifth aspect and any one of the implementations of the fifth aspect respectively correspond to the first aspect and any one of the implementations of the first aspect. For technical effects corresponding to the fifth aspect and any one of the implementations of the fifth aspect, refer to technical effects corresponding to the first aspect and any one of the implementations of the first aspect. Details are not described herein again.

According to a sixth aspect, an embodiment of this application provides a coding apparatus, including a memory and a processor. The memory is coupled to the processor. The memory stores program instructions. When the program instructions are executed by the processor, an electronic device is enabled to perform the method for decoding the image in the first aspect or any one of the possible implementations of the first aspect.

The sixth aspect and any one of the implementations of the sixth aspect respectively correspond to the first aspect and any one of the implementations of the first aspect. For technical effects corresponding to the sixth aspect and any one of the implementations of the sixth aspect, refer to technical effects corresponding to the first aspect and any one of the implementations of the first aspect. Details are not described herein again.

According to a seventh aspect, an embodiment of this application provides a chip, including one or more interface circuits and one or more processors. The one or more processors receive or send data through the one or more interface circuits. When the one or more processors execute computer instructions, the steps of the method for decoding the image in the first aspect or any one of the possible implementations of the first aspect are performed.

The seventh aspect and any one of the implementations of the seventh aspect respectively correspond to the first aspect and any one of the implementations of the first aspect. For technical effects corresponding to the seventh aspect and any one of the implementations of the seventh aspect, refer to technical effects corresponding to the first aspect and any one of the implementations of the first aspect. Details are not described herein again.

According to an eighth aspect, an embodiment of this application provides a computer-readable storage medium. The computer-readable storage medium stores a computer program. When the computer program is run on a computer or a processor, the computer or the processor is enabled to perform the method for decoding the image in the first aspect or any one of the possible implementations of the first aspect.

The eighth aspect and any one of the implementations of the eighth aspect respectively correspond to the first aspect and any one of the implementations of the first aspect. For technical effects corresponding to the eighth aspect and any one of the implementations of the eighth aspect, refer to technical effects corresponding to the first aspect and any one of the implementations of the first aspect. Details are not described herein again.

According to a ninth aspect, an embodiment of this application provides a computer program product. The computer program product includes computer instructions. When the computer instructions are executed by a computer or a processor, the computer or the processor is enabled to perform the method for decoding the image in the first aspect or any one of the possible implementations of the first aspect.

The ninth aspect and any one of the implementations of the ninth aspect respectively correspond to the first aspect and any one of the implementations of the first aspect. For technical effects corresponding to the ninth aspect and any one of the implementations of the ninth aspect, refer to technical effects corresponding to the first aspect and any one of the implementations of the first aspect. Details are not described herein again.

## BRIEF DESCRIPTION OF DRAWINGS

FIG. 1A is a diagram of an example of an application framework;
FIG. 1B is a diagram of an example of a storage framework;
FIG. 1C is a diagram of an example of a transmission framework;
FIG. 2A is a diagram of an example of a compression framework;
FIG. 2B is a diagram of an example of a compression framework;
FIG. 2C is a diagram of an example of a training framework;
FIG. 2D is a diagram of an example of a training framework;
FIG. 2E is a diagram of an example of a feature adjustment process;
FIG. 3A is a diagram of an example of a compression framework;
FIG. 3B is a diagram of an example of a compression framework;
FIG. 3C is a diagram of an example of a compression framework;
FIG. 3D is a diagram of an example of a compression framework;
FIG. 3E is a diagram of an example of an encoding process;
FIG. 4 is a diagram of an example of a decoding process;
FIG. 5A is a diagram of an example of a reconstructed image;
FIG. 5B is a diagram of an example of a reconstructed image;
FIG. 5C is a diagram of an example of a reconstructed image;
FIG. 5D is a diagram of an example of a reconstructed image;
FIG. 6 is a diagram of an example of a decoding apparatus; and
FIG. 7 is a diagram of an example of a structure of an apparatus.

## DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in the specification merely describes an association relationship between associated objects and indicates that three relationships may exist. For example, A and/or B may indicate the following three cases: Only A exists, both A and B exist, and only B exists.

In the specification and claims of embodiments of this application, the terms "first", "second", and the like are intended to distinguish between different objects but do not indicate a particular order of the objects. For example, a first target object, a second target object, and the like are used to distinguish between different target objects, but do not indicate a particular order of the objects.

In embodiments of this application, the expression "example", "for example", or the like is used to give an example, an illustration, or a description. Any embodiment or design scheme described as an "example" or "for example" in embodiments of this application shall not be construed as being more preferred or more advantageous than another embodiment or design scheme. Exactly, use of the expression "example", "for example", or the like is intended to present a related concept in a specific manner.

In descriptions of embodiments of this application, unless otherwise specified, "a plurality of" means two or more. For example, a plurality of processing units mean two or more processing units, and a plurality of systems mean two or more systems.

This application may be applied to all services of image/video transmission and image/video storage, for example, terminal photographing, terminal video, album, Huawei Cloud, and livestreaming. This is not limited in this application.

For example, a decoding method in this application may be used to decode an image/a video. In this application, an image is used as an example for description.

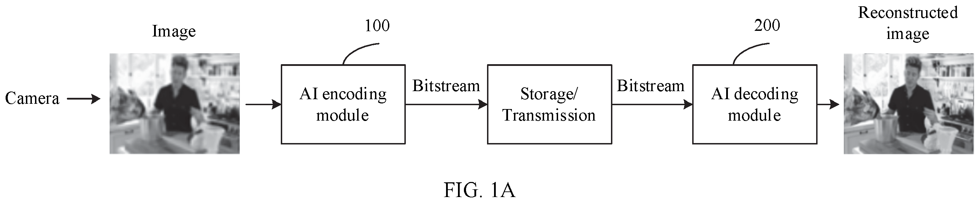

FIG. 1A is a diagram of an example of an application framework.

Refer to FIG. 1A. For example, a camera (camera/image shooting device) may perform image capture, to obtain an image. Then, an AI encoding module 100 may perform AI encoding on the image, to obtain a bitstream. Next, the bitstream may be stored locally, or the bitstream may be transmitted to a remote device.

Still refer to FIG. 1A. In a possible manner, after the bitstream is stored locally, when the image needs to be played or edited, an AI decoding module 200 may perform AI decoding on the bitstream, to obtain a reconstructed image, and then the reconstructed image may be played or edited.

Still refer to FIG. 1A. In a possible manner, after the remote device receives the bitstream, when the image needs to be played or edited, an AI decoding module 200 may perform AI decoding on the bitstream, to obtain a reconstructed image, and then the reconstructed image may be played or edited.

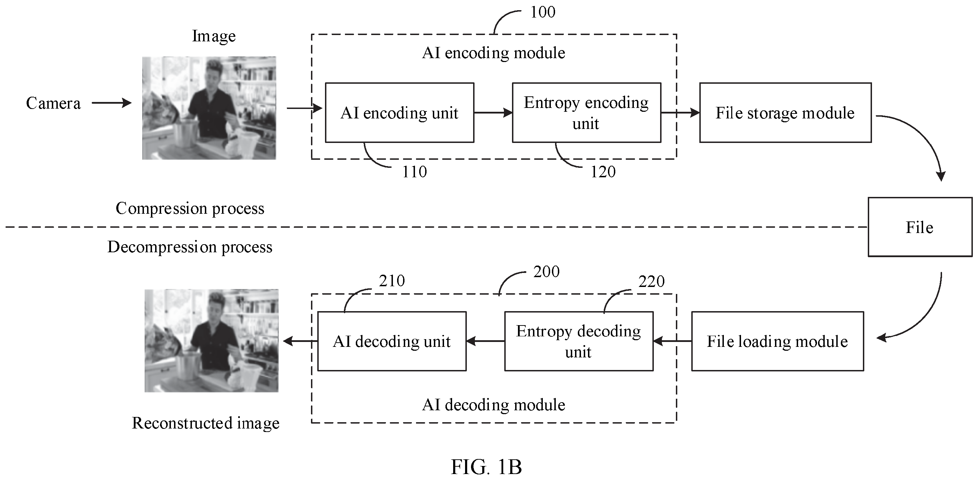

FIG. 1B is a diagram of an example of a storage framework.

Refer to FIG. 1B. For example, the AI encoding module 100 may include an AI encoding unit 110 and an entropy encoding unit 120, and the AI decoding module 200 may include an AI decoding unit 210 and an entropy decoding unit 220. It should be understood that FIG. 1B is merely an example of this application, and the AI encoding module 100 and the AI decoding module 200 may include more units than those shown in FIG. 1B. This is not limited in this application.

For example, the AI encoding unit 110 and the AI decoding unit 210 may be disposed in an embedded neural network processing unit (Neural network Processing Unit, NPU) or a graphics processing unit (Graphics Processing Unit, GPU). For example, the entropy encoding unit 120 and the entropy decoding unit 220 may be disposed in a central processing unit (Central Processing Unit, CPU). For example, a file storage module and a file loading module may be disposed in the CPU.

Refer to FIG. 1B. For example, after capturing the image, the camera may input the image to the AI encoding unit 110. Then, the AI encoding unit 110 may perform feature extraction on the image, to obtain a feature map of the image, and output the feature map of the image to the entropy encoding unit 120. Next, the entropy encoding unit 120 may perform entropy encoding on the feature map of the image, to obtain the bitstream, and then output the bitstream to the file storage module for storage, to obtain a file.

Still refer to FIG. 1B. For example, when the image needs to be played or edited, the file loading module may load the file, and then output the bitstream in the file to the entropy decoding unit 220. Then, the entropy decoding unit 220 may obtain the feature map of the image from the bitstream through entropy decoding, and output the feature map of the image to the AI decoding unit 210. Next, the AI decoding unit 210 may decode the feature map of the image, to obtain the reconstructed image.

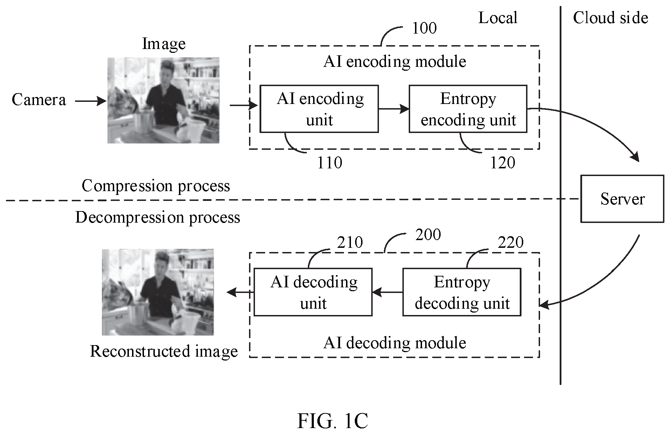

FIG. 1C is a diagram of an example of a transmission framework.

Refer to FIG. 1C. For example, after capturing the image, the camera at an encoder side may input the image to the AI encoding unit 110. Then, the AI encoding unit 110 may perform feature extraction on the image, to obtain the feature map of the image, and output the feature map of the image to the entropy encoding unit 120. Next, the entropy encoding unit 120 may perform entropy encoding on the feature map of the image, to obtain the bitstream, and then send the bitstream to a server.

Still refer to FIG. 1C. For example, after receiving the bitstream sent by the server, a decoder side may input the bitstream to the entropy decoding unit 220. Then, the entropy decoding unit 220 may obtain the feature map of the image from the bitstream through entropy decoding, and output the feature map of the image to the AI decoding unit 210. Next, the AI decoding unit 210 may decode the feature map of the image, to obtain the reconstructed image.

It should be understood that the encoder side may be directly connected to the decoder side. In this way, the encoder side can directly send the bitstream to the decoder side, without forwarding by another device (for example, the server). This is not limited in this application.

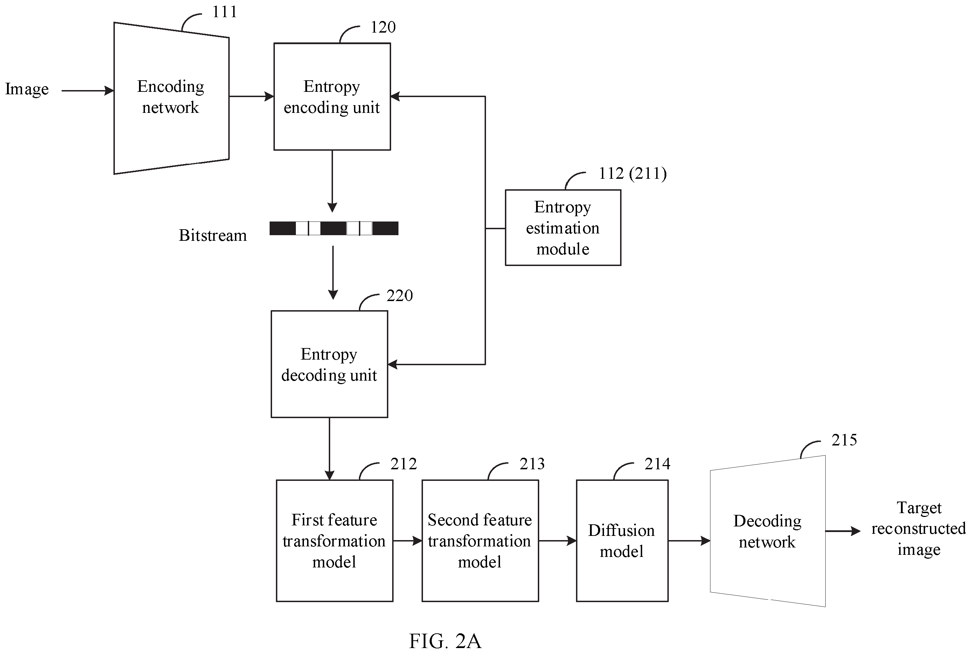

FIG. 2A is a diagram of an example of a compression framework. FIG. 2A shows a compression framework of this application.

Refer to FIG. 2A. For example, an AI encoding unit 110 may include an encoding network 111 and an entropy estimation module 112 (211). It should be understood that FIG. 2A is merely an example of this application, and the AI encoding unit 110 may include more models or modules. This is not limited in this application.

Still refer to FIG. 2A. For example, an AI decoding unit 210 may include a first feature transformation model 212, a second feature transformation model 213, a diffusion model 214, a decoding network 215, and the entropy estimation module 112 (211). It should be understood that FIG. 2A is merely an example of this application, and the AI decoding unit 210 may include more or fewer models or modules. This is not limited in this application.

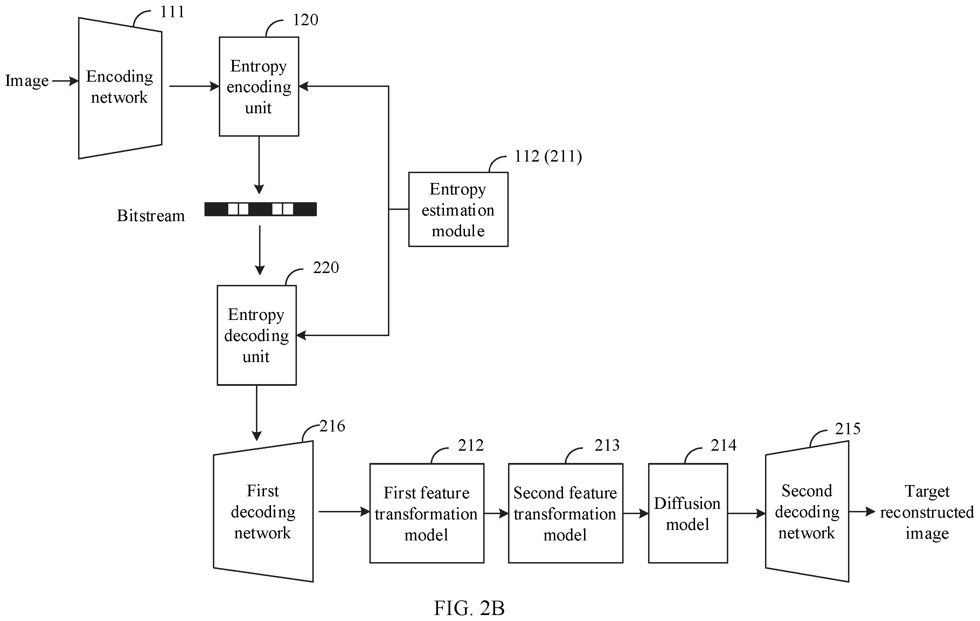

FIG. 2B is a diagram of an example of a compression framework. FIG. 2B shows another compression framework of this application.

Refer to FIG. 2B. For example, an AI encoding unit 110 may include an encoding network 111 and an entropy estimation module 112 (211). It should be understood that FIG. 2B is merely an example of this application, and the AI encoding unit 110 may include more models or modules. This is not limited in this application.

Still refer to FIG. 2B. For example, an AI decoding unit 210 includes a first decoding network 216, a first feature transformation model 212, a second feature transformation model 213, a diffusion model 214, a second decoding network 215, and the entropy estimation module 112 (211). It should be understood that FIG. 2B is merely an example of this application, and the AI decoding unit 210 may include more or fewer models or modules. This is not limited in this application.

For example, the models/networks in FIG. 2A and FIG. 2B may be implemented by a neural network, for example, a deep neural network (deep neural network, DNN), a convolutional neural network (convolutional neural network, CNN), a recurrent neural network (recurrent neural network, RNN), a residual network, a neural network using a transformer model, or another neural network. This is not limited in this application.

For example, work at each layer of the neural network may be described by using a mathematical expression $\vec{y} = a(W \cdot \vec{x} + b)$. From a physical aspect, work at each layer of the neural network may be understood as completing transformation from input space to output space (that is, from row space to column space of a matrix) through five operations on the input space (a set of input vectors). The five operations include: 1. dimension increase/dimension reduction; 2. scaling up/down; 3. rotation; 4. translation; and 5. "bending". The operation 1, the operation 2, and the operation 3 are completed by $W \cdot \vec{x}$, the operation 4 is completed by $+b$, and the operation 5 is completed by $a()$. The word "space" is used herein for description because a classified object is not a single thing, but a type of thing. Space is a set of all individuals of this type of thing. $W$ is a weight vector, and each value in the vector indicates a weight value of one neuron at this layer of the neural network. The vector W determines space transformation from the input space to the output space. In other words, a weight W at each layer controls how to transform space.

For example, the diffusion model 214 is a model used to generate an image/a feature, and the diffusion model 214 may include a convolutional layer. In a possible manner, the diffusion model 214 may include at least one convolutional layer and at least one activation layer. In a possible manner, the diffusion model 214 may include at least one convolutional layer and at least one normalization layer. In a possible manner, the diffusion model 214 may include at least one convolutional layer, at least one activation layer, and at least one normalization layer. For example, a network structure used in a denoising process (or a feature generation processing process) of the diffusion model 214 may be a U-NET or another network structure. It should be understood that a network structure of the diffusion model 214 is not limited in this application.

For example, the first feature transformation model 212 and the second feature transformation model 213 may include a convolutional layer.

An example is used below for description: The encoding network 111 is an image compression encoder (Image Compression Encoder, IC Encoder), the first decoding network 216 is an image compression decoder (Image Compression Decoder, IC Decoder), a network structure used by the first feature transformation model 212 is a time-aware feature transformer (Time-Aware Feature Transformer, TAFT) network, a network structure used by the second feature transformation model 213 is a spatial feature transformation (spatial feature transformation, SFT) network, the network structure used in the denoising process of the diffusion model 214 is a U-NET, and the second decoding network 215 in FIG. 2B (or the decoding network 215 in FIG. 2A) is a decoder (Decoder).

For example, the foregoing networks may be trained in advance, so that a trained network can be used for encoding and decoding subsequently. An objective of training a neural network is to finally obtain a weight matrix (a weight matrix formed by vectors W of a plurality of layers) of all layers of a trained neural network. Therefore, a process of training the neural network is essentially a manner of learning control of space transformation, and more specifically, learning a weight matrix.

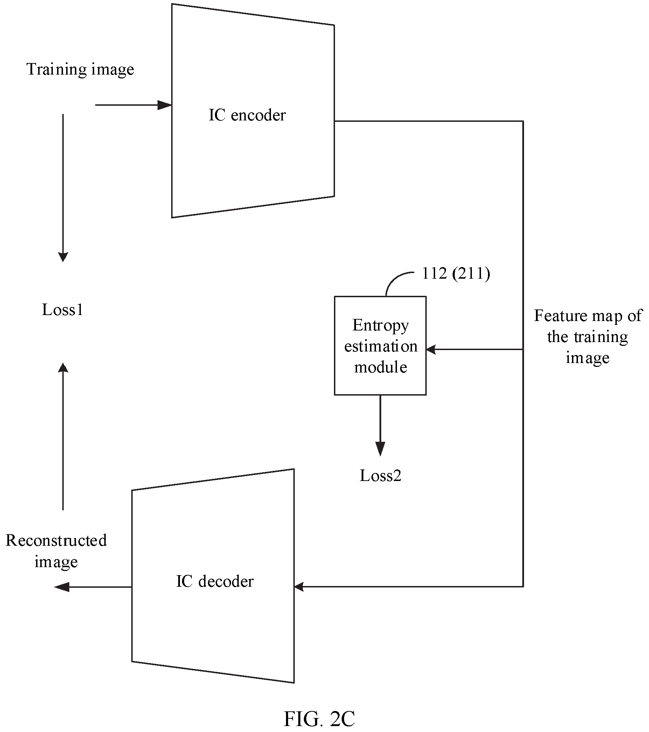

FIG. 2C is a diagram of an example of a training framework.

Refer to FIG. 2C. For example, the IC encoder and the IC decoder may include network layers such as a convolutional layer, a deconvolutional layer, and an activation layer. This is not limited in this application.

For example, a process of training the IC encoder and the IC decoder in FIG. 2C may be as follows.

First, a training image is input to the IC encoder, and the IC encoder performs feature extraction on the training image, to obtain a feature map of the training image.

Then, the feature map of the training image is input to the entropy estimation module 112 (211) and the IC decoder.

For example, the IC decoder may decode the feature map of the training image, to obtain a reconstructed image. Next, a distortion loss may be determined based on the training image and the reconstructed image (the distortion loss may be a difference (for example, an error) between the training image and the reconstructed image, namely, Loss1 in FIG. 2C, which may also be referred to as an image reconstruction loss). For example, a mean squared error (Mean Squared Error, MSE) between the training image and the reconstructed image may be calculated and used as Loss1.

In addition, the entropy estimation module 112 (211) may determine, based on the feature map of the training image, a bit rate loss (that is, an estimated bit rate of the encoded training image), namely, Loss2 in FIG. 2C.

Then, a final loss (Loss) used for training the IC encoder and the IC decoder in FIG. 2C may be determined based on Loss1 and Loss2. Refer to Formula (1):

$$Loss = \alpha Loss1 + Loss2 \qquad (1)$$

In Formula (1), $\alpha$ is a weight coefficient of the distortion loss, and may be specifically set according to a requirement. This is not limited in this application.

It should be understood that, another loss (for example, a perception loss (that is, learned perceptual image patch similarity (Learned Perceptual Image Patch Similarity, LPIPS))) may be further introduced, and the another loss is combined (for example, weighted) with Loss1 and Loss2, to obtain a final loss (Loss) used for training the IC encoder and the IC decoder in FIG. 2C. This is not limited in this application.

Next, the IC encoder and the IC decoder in FIG. 2C may be trained with an objective of minimizing the loss in Formula (1), until a first preset condition is satisfied. The first preset condition may be set according to a requirement. For example, a quantity of times of training reaches a first preset quantity of times. For another example, a difference between losses obtained in two consecutive times of training is less than a first preset difference. For example, the loss is less than a first threshold, or the like. This is not limited in this application. The first preset quantity of times, the first preset difference, and the first threshold may be set according to a requirement. This is not limited in this application.

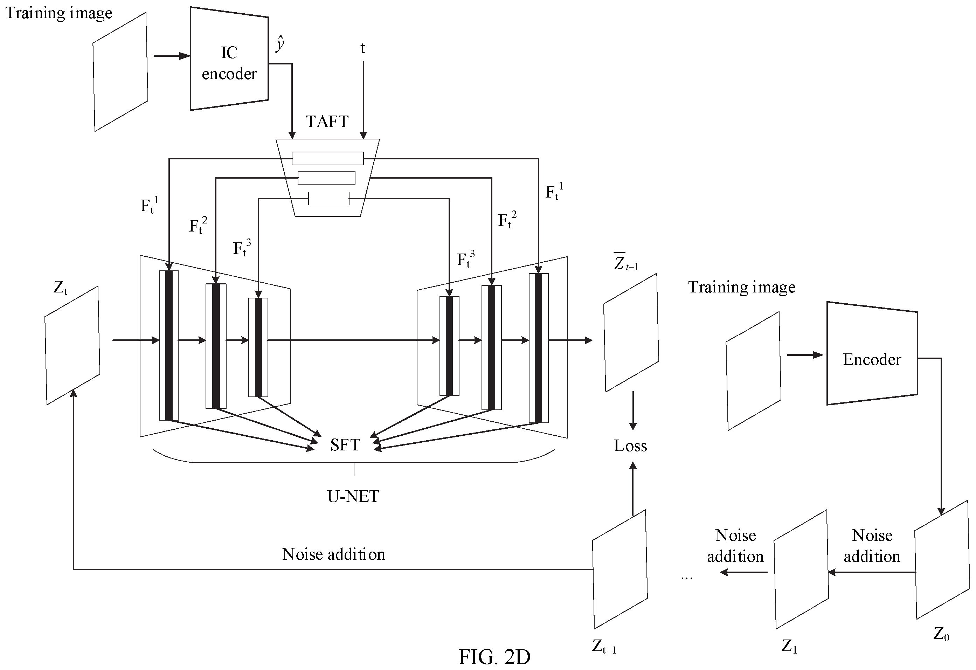

FIG. 2D is a diagram of an example of a training framework.

For example, a TAFT, an SFT, a U-NET, and an encoder in FIG. 2D belong to an image generation model (for example, a stable diffusion (Stable Diffusion, SD) model, where the image diffusion model may include the TAFT, the SFT, the U-NET, the encoder, and a decoder). Completing training of the image generation model means completing training of the TAFT, the SFT, the U-NET, the encoder, and the decoder. For details, refer to a process of training an image generation model in a conventional technology. Details are not described herein.

It should be noted that, in this application, optimization training is performed only on the TAFT and the SFT that are obtained by training the image generation model, and training is not performed on the U-NET and the encoder that are obtained by training the image generation model.

For example, the TAFT may include n (n is a positive integer) downsampling layers (the downsampling layer may be a convolutional layer). In FIG. 2D, n is equal to 3. In other words, the TAFT shown in FIG. 2D includes three downsampling layers. One white rectangle in the TAFT in FIG. 2D represents one downsampling layer. For example, downsampling factors of the three downsampling layers included in the TAFT in FIG. 2D are different. Correspondingly, the three downsampling layers of the TAFT output features of three scales (that is, output features of three sizes).

For example, the SFT may include 2n blocks (Blocks), and one block may include at least one convolutional layer. In FIG. 2D, n is equal to 3. In other words, the SFT shown in FIG. 2D includes six blocks. One black rectangle in the SFT in FIG. 2D represents one block.

It should be noted that, in this embodiment, the U-NET is of a U-shaped structure, and output information of the SFT is used to adjust an intermediate feature generated in a process in which the U-NET performs feature generation processing. Therefore, the SFT may also be of a U-shaped structure. As shown in FIG. 2D, a left half includes three blocks, and a right half includes three blocks.

Refer to FIG. 2D. For example, a process of training the TAFT and the SFT may be as follows.

For example, t in FIG. 2D indicates time information, a value of t ranges from 0 to T, and T is a positive integer.

A training image is input to an IC encoder (an IC encoder obtained through training according to the foregoing descriptions), to obtain a feature map $\hat{y}$ of the training image. For example, a size of the training image is $3{\times}512{\times}512$ ("${\times}$" does not indicate multiplication but indicates the size or dimensions of the training image, "3" indicates a quantity of channels of the training image, the first "512" indicates a length of the training image, and the second "512" indicates a width of the training image). In this case, a size of the feature map $\hat{y}$ of the training image may be $192{\times}32{\times}32$. It should be understood that the sizes of the training image and the feature map of the training image are not limited in this application.

In addition, the training image may be input to the encoder, to obtain an image $Z_0$ (which is a state (or an image) when the time information t is equal to 0, or referred to as a state (or an image) of a $0^{th}$ piece of time information). Then, noise addition is performed on $Z_0$, to obtain an image $Z_1$ (which is a state (or an image) when the time information t is equal to 1, or referred to as a state (or an image) of a $1^{st}$ piece of time information). Next, noise addition is performed on $Z_1$, to obtain an image $Z_2$ (which is a state (or an image) when the time information t is equal to 2, or referred to as a state (or an image) of a $2^{nd}$ piece of time information); ...; and so on. Noise addition is performed step by step, so that an image $Z_{T-1}$ and an image $Z_T$ (which is a state (or an image) when the time information t is equal to T, or referred to as a state (or an image) of a $T^{th}$ piece of time information) can be obtained. This process is a noise addition process of the diffusion model 214.

For example, for each piece of time information, random Gaussian noise may be correspondingly sampled, to obtain preset noise $\varepsilon \sim N(0,1)$ ($N(0,1)$ is a Gaussian distribution, and $\varepsilon \sim N(0,1)$ indicates that the preset noise follows the Gaussian distribution); and noise addition is performed on an image of previous time information based on the preset noise obtained through sampling for the current time information, to obtain an image of the current time information. For a specific noise addition manner, refer to descriptions in a conventional technology. Details are not described herein. A size of the preset noise obtained through sampling is the same as a size of $Z_0$. For example, the size of the training image is $3 \times 512 \times 512$, and a size of $Z_0$ output after processing by the encoder may be $4 \times 64 \times 64$. In this case, the size of the preset noise obtained through sampling may be $4 \times 64 \times 64$.

For example, one piece of time information may be randomly selected from 1 to T as a value of t, and the feature map ŷ of the training image and the time information t are input to the TAFT, to obtain features $F_t^1$, $F_t^2$, and $F_t^3$. For example, t is equal to T, and in this case, the feature map ŷ of the training image and the time information T are input to the TAFT, to obtain $F_T^1$, $F_T^2$, and $F_T^3$.

Then, the TAFT may input $F_T^1$, $F_T^2$, and $F_T^3$ to the SFT, to obtain feature adjustment parameters: a first feature adjustment parameter and a second feature adjustment parameter. For example, the TAFT may separately input a feature of one scale to one block in the left half of the SFT and one block in the right half of the SFT. For ease of description, the three convolutional layers of the TAFT may be sequentially referred to as a $1^{st}$ convolutional layer, a $2^{nd}$ convolutional layer, and a $3^{rd}$ convolutional layer from top to bottom, the blocks in the left half of the SFT may be sequentially referred to as a $1^{st}$ block, a $2^{nd}$ block, and a $3^{rd}$ block from left to right, and the blocks in the right half of the SFT may be sequentially referred to as a $1^{st}$ block, a $2^{nd}$ block, and a $3^{rd}$ block from right to left. For example, the $1^{st}$ convolutional layer of the TAFT separately inputs the feature $F_t^1$ to the $1^{st}$ block in the left half of the SFT and the $1^{st}$ block in the right half of the SFT, the $2^{nd}$ convolutional layer of the TAFT separately inputs the feature $F_t^2$ to the $2^{nd}$ block in the left half of the SFT and the $2^{nd}$ block in the right half of the SFT, and the $3^{rd}$ convolutional layer of the TAFT separately inputs the feature $F_t^3$ to the $3^{rd}$ block in the left half of the SFT and the $3^{rd}$ block in the right half of the SFT.

For example, each block of the SFT may determine the first feature adjustment parameter and the second feature adjustment parameter according to Formula (2):

$$A^n, B^n = M_\theta{}^n\left(F_t^n\right) \qquad (2)$$

$A^n$ is a first feature adjustment parameter corresponding to an $n^{th}$ block of the SFT, $B^n$ is a second feature adjustment parameter corresponding to the $n^{th}$ block of the SFT, and $M_\theta{}^n$ is a network parameter of the $n^{th}$ block of the SFT.

For example, with reference to Formula (2), it is assumed that t is equal to T, and values of n are 1, 2, and 3. In this case, $F_T^1$ is input to the $1^{st}$ block in the left half of the SFT and the $1^{st}$ block in the right half of the SFT (parameters of the two blocks are $M_\theta^1$), to obtain a corresponding first feature adjustment parameter $A^1$ and a corresponding second feature adjustment parameter $B^1$; $F_T^2$ is input to the $2^{nd}$ block in the left half of the SFT and the $2^{nd}$ block in the right half of the SFT (parameters of the two blocks are $M_\theta^2$), to obtain a corresponding first feature adjustment parameter $A^2$ and a corresponding second feature adjustment parameter $B^2$; and $F_T^3$ is input to the $3^{rd}$ block in the left half of the SFT and the $3^{rd}$ block in the right half of the SFT (parameters of the two blocks are $M_\theta^3$), to obtain a corresponding first feature adjustment parameter $A^3$ and a corresponding second feature adjustment parameter $B^3$.

Then, a state at a moment t may be determined. Refer to Formula (3):

$$Z_t = \sqrt{\phi_t}\,Z_0 + \left(\sqrt{1-\phi_t}\right)\varepsilon \qquad (3)$$

$\phi_t$ is a hyperparameter of the diffusion model 214.

In addition, a state at a moment t-1 is determined. Refer to Formula (4):

$$Z_{t-1} = \sqrt{\phi_{t-1}} Z_0 + \left( \sqrt{1 - \phi_{t-1}} \right) \varepsilon \qquad (4)$$

$\phi_{t-1}$ is a hyperparameter of the diffusion model 214.

Next, the time information (for example, T) randomly selected from 1 to T and $Z_t$ are input to the U-NET, to obtain $\overline{Z}_{t-1}$ (which is a predicted state (or image) of a $(T-1)^{th}$ piece of time information). For example, when the time information t is equal to T, $Z_T$ is input to the U-NET, to obtain $\overline{Z}_{T-1}$.

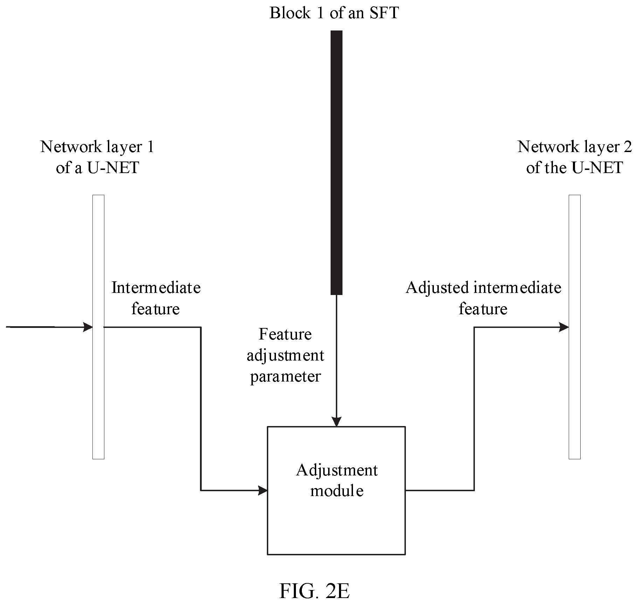

FIG. 2E is a diagram of an example of a feature adjustment process.

For example, an adjustment module is further disposed between the second feature transformation model 213 and the diffusion model 214 in FIG. 2A and FIG. 2B. The adjustment module may be implemented by an algorithm. The adjustment module may be configured to adjust, based on a feature adjustment parameter output by the second feature transformation model 213, an intermediate feature generated in a process in which the diffusion model 214 performs feature generation processing.

Refer to FIG. 2E. For example, an intermediate feature output by a network layer 1 of the U-NET and a feature adjustment parameter output by a block of the SFT may be input to the adjustment module. The adjustment module adjusts, based on the feature adjustment parameter output by the SFT, the intermediate feature output by the network layer 1 of the U-NET, to obtain an adjusted intermediate feature, and inputs the adjusted intermediate feature to a network layer 2 of the U-NET.

In a possible manner, the adjustment module may adjust, according to Formula (5), an intermediate feature generated in a process in which the U-NET performs feature generation processing.

$$\hat{F}_{dif}^{n} = C^n \odot F_{dif}^{n} + B^n, \; C^n = A^n \text{or} \left( A^n + 1 \right) \qquad (5)$$

$F_{dif}^{n}$ is an intermediate feature generated in a process in which the U-NET performs feature generation processing (for example, an intermediate feature output by the network layer 1 of the U-NET in FIG. 2E), and $\hat{F}_{dif}^{n}$ is an adjusted intermediate feature (for example, a feature input to the network layer 2 of the U-NET in FIG. 2E).

After feature adjustment is performed on the intermediate feature generated in the process in which the U-NET performs feature generation processing, an original feature and a detailed feature included in the intermediate feature generated in the process in which the U-NET performs feature generation processing are weakened. Therefore, in comparison with $C^n = A^n$, in a solution of $C^n = (A^n + 1)$, the intermediate feature before adjustment is retained in the adjusted intermediate feature. In other words, the original feature and the detailed feature included in the intermediate feature before adjustment are added to the adjusted intermediate feature. This can ensure accuracy of a feature input to a next network layer, so that accuracy of an obtained state of a $(t-1)^{th}$ piece of time information can be enhanced.

It should be noted that an output of the U-NET is predicted noise (that is, noise predicted by the U-NET) $\hat{\varepsilon} = \varepsilon_\theta(Z_t, t, y)$ ($\varepsilon_\theta$ is a general term of network parameters of the TATF, the SFT, and the U-NET). Subsequently, $\overline{Z}_{T-1}$ may be determined according to a noise addition principle based on the predicted noise. Refer to Formula (6) and Formula (7):

$$\overline{Z}_0 = \frac{Z_t - \left( \sqrt{1 - \phi_t} \right) \hat{\varepsilon}}{\sqrt{\phi_t}} \qquad (6)$$

$$\overline{Z}_{t-1} = \sqrt{\phi_{t-1}} \overline{Z}_0 + \left( \sqrt{1 - \phi_{t-1}} \right) \hat{\varepsilon} \qquad (7)$$

$\phi_t$ and $\phi_{t-1}$ are hyperparameters of the diffusion model 214.

For example, back propagation may be performed for the SFT and the TAFT with an objective of minimizing $Loss = \|Z_{t-1} - Z_{t-1}(Z_t, t, y$ parameter of the TAFT. To reduce a calculation amount, a loss function may be converted from $Loss = \|Z_{t-1} - \overline{Z}_{t-1}(Z_t, t, y Loss \; \varepsilon \varepsilon_\theta(Z_t, t, y)\|$. Then, back propagation is performed for the SFT and the TAFT with an objective of minimizing $Loss = \|\varepsilon - \varepsilon_\theta(Z_t, t, y)\|$, to adjust the network parameter of the SFT and the network parameter of the TAFT.

In this way, the SFT and the TAFT can be trained by using one training image. Then, the SFT and the TAFT may be trained in this manner by using more training images, until a second preset condition is satisfied. The second preset condition may be set according to a requirement. For example, $Loss = \|\varepsilon - \varepsilon_\theta(Z_t, t, y$ than a second threshold. For another example, a quantity of times of training the SFT and the TAFT reaches a second quantity of prediction times. For still another example, a difference between losses obtained in two consecutive times of training is less than a second preset difference, or the like. This is not limited in this application. The second preset quantity of times, the second preset difference, and the second threshold may be set according to a requirement. This is not limited in this application.

After training of the SFT and the TAFT is completed, in a decoding process, the SFT, the TAFT, the U-NET, and the decoder may be used for decoding (the decoder belongs to the foregoing image generation model, and is obtained by training the image generation model. In this application, optimization training may be performed on the decoder, or optimization training may not be performed on the decoder. For details, refer to subsequent descriptions).

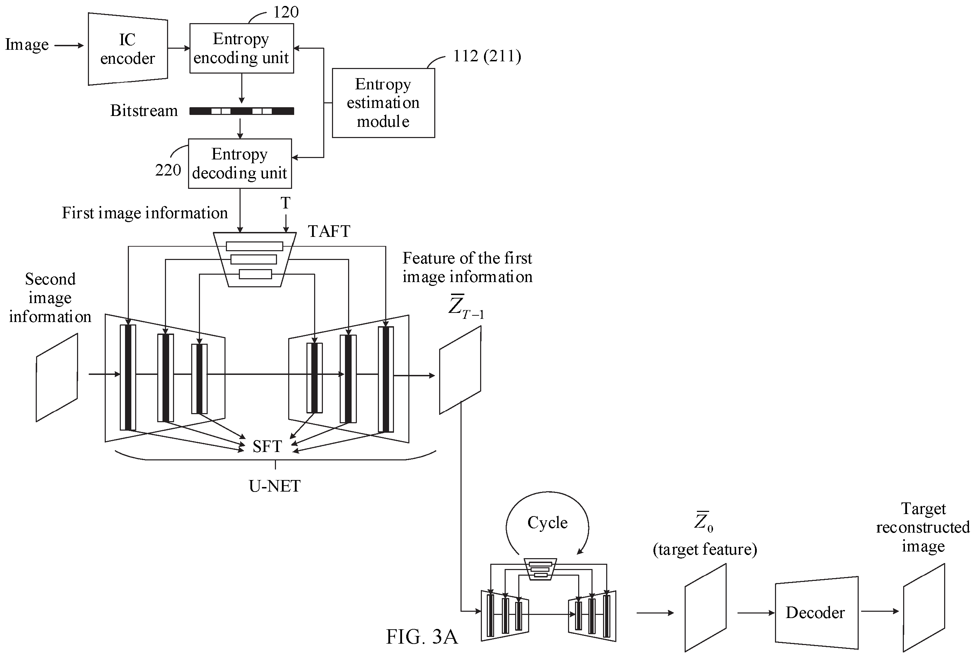

The following describes an image decoding process based on a compression framework shown in FIG. 3A to FIG. 3D.

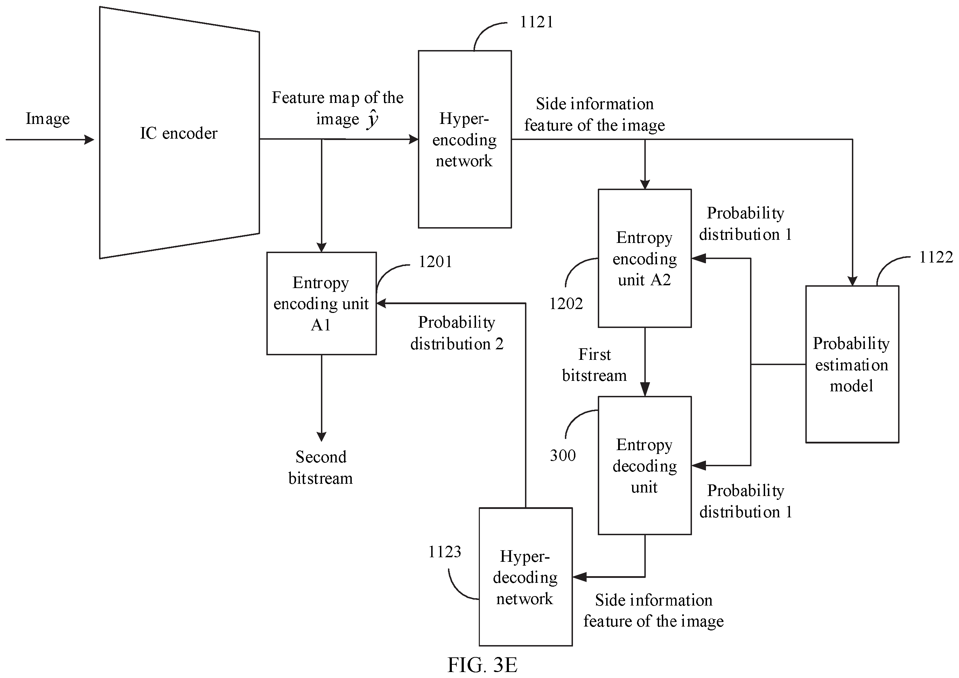

For ease of description of the decoding process, an image encoding process may be described with reference to FIG. 3E.

Refer to FIG. 3E. For example, an entropy estimation module 112 (211) may be implemented by a hyperprior network, and the hyperprior network may include a hyper-encoding network 1121, a probability estimation model 1122, and a hyper-decoding network 1123. It should be understood that FIG. 3E is merely an example of this application, and the hyperprior network in this application may include more or fewer networks or models. This is not limited in this application. In addition, the entropy estimation module 112 (211) may alternatively be implemented by another network. This is not limited in this application.

For example, the hyper-encoding network 1121 and the hyper-decoding network 1123 may include network layers such as a convolutional layer, a deconvolutional layer, and an activation layer. This is not limited in this application.

For example, an entropy encoding unit 120 in FIG. 3A to FIG. 3D may include an entropy encoding unit A1 (1201) and an entropy encoding unit A2 (1202) in FIG. 3E.

For example, the image encoding process may be as follows.

First, an image is input to an IC encoder, and the IC encoder performs feature extraction on the image, to obtain a feature map $\hat{y}$ of the image. The feature map $\hat{y}$ of the image is input to the hyper-encoding network 1121 and the entropy encoding unit A1 (1201).

Then, the hyper-encoding network 1121 may process the feature map $\hat{y}$ of the image, to obtain a side information feature of the image; and input the side information feature of the image to the entropy encoding unit A2 (1202) and the probability estimation model 1122.

For example, the probability estimation model 1122 may be a factorized entropy (factorized entropy) model. The factorized entropy model may determine, based on the side information feature of the image, a probability distribution of the side information feature of the image (namely, a probability distribution 1), and output the probability distribution 1 to the entropy encoding unit A2 (1202) and an entropy decoding unit 300.

Then, the entropy encoding unit A2 (1202) may perform entropy encoding (for example, asymmetric numeral systems (Asymmetric Numeral Systems, ANS) entropy encoding) on the side information feature of the image according to the probability distribution 1, to obtain a first bitstream.

Then, the entropy decoding unit 300 may perform entropy decoding on the first bitstream according to the probability distribution 1, to obtain the side information feature of the image; and output the side information feature of the image to the hyper-decoding network 1123.

Next, the hyper-decoding network 1123 may determine, based on the side information feature of the image, a probability distribution of the feature map of the image (namely, a probability distribution 2, where the probability distribution 2 is, for example, a Gaussian probability distribution, and the probability distribution 2 may include a mean and a variance); and output the probability distribution 2 to the entropy encoding unit A1 (1201).

For example, the entropy encoding unit A1 (1201) may perform entropy encoding on the feature map of the image according to the probability distribution 2, to obtain a second bitstream.

In other words, a bitstream in FIG. 3A to FIG. 3D may include the first bitstream and the second bitstream.

The following describes a decoding process.

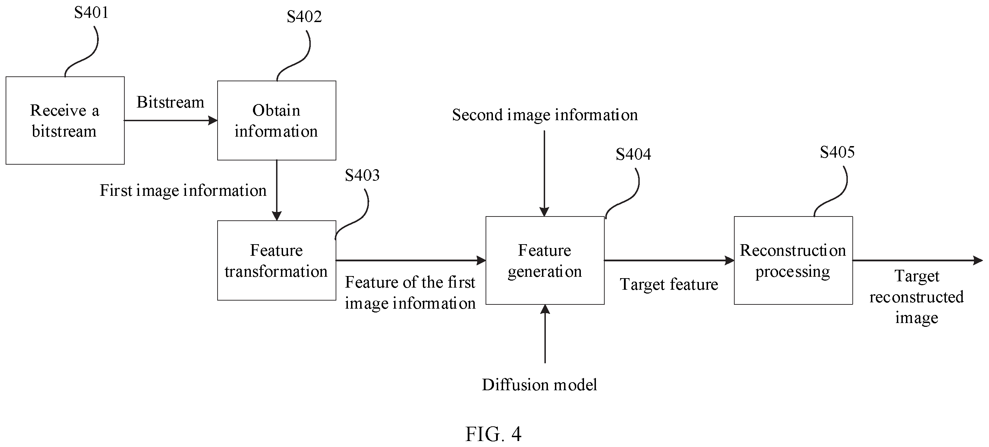

FIG. 4 is a diagram of an example of a decoding process.

S401: Receive a bitstream.

For example, a decoder side receives the bitstream. The bitstream may include a first bitstream and a second bitstream. The first bitstream may be a bitstream obtained by performing entropy encoding on a side information feature of an image. The second bitstream may be a bitstream obtained by performing entropy encoding on a feature map of the image.

S402: Obtain first image information based on the bitstream.

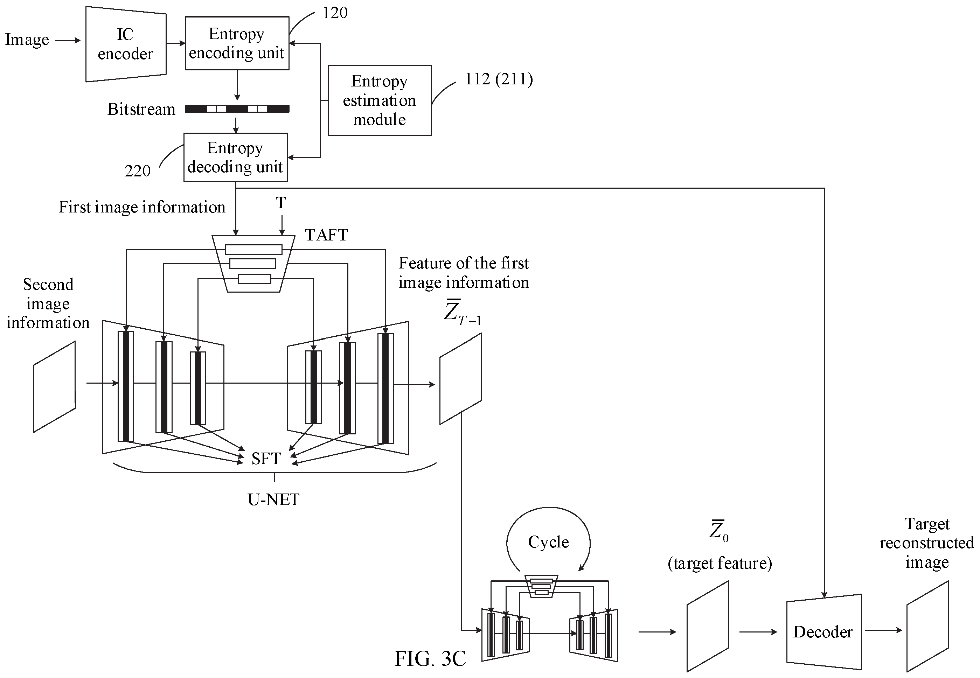

Refer to FIG. 3A or FIG. 3C. For example, in a possible manner, entropy decoding may be performed on the first bitstream, to obtain the side information feature of the image, and the side information feature of the image is used as the first image information. Specifically, the decoder side may also include a probability estimation model 1122 and a hyper-decoding network 1123 shown in FIG. 3E. The probability estimation model 1122 may determine a probability distribution of the side information feature of the image based on the first bitstream, and output the probability distribution of the side information feature of the image to an entropy decoding unit 220. The entropy decoding unit 220 may perform entropy decoding (for example, asymmetric numeral systems entropy decoding) on the first bitstream according to the probability distribution of the side information feature of the image, to obtain the side information feature of the image.

Refer to FIG. 3A or FIG. 3C. For example, in a possible manner, entropy decoding may be performed on the first bitstream, to obtain the side information feature of the image, entropy decoding is performed on the second bitstream based on the side information feature of the image, to obtain the feature map of the image, and the feature map of the image is used as the first image information. For a manner of obtaining the side information feature of the image, refer to the foregoing descriptions. Details are not described herein again. Then, the side information feature of the image may be output to the hyper-decoding network 1123, to obtain a probability distribution (which may be, for example, a mean $\mu$ and a variance $\sigma$ of a Gaussian probability distribution) of the feature map of the image, and the probability distribution of the feature map of the image is output to the entropy decoding unit 220. The entropy decoding unit 220 may perform entropy decoding (for example, asymmetric numeral systems entropy decoding) on the second bitstream according to the probability distribution of the feature map of the image, to obtain the feature map of the image.

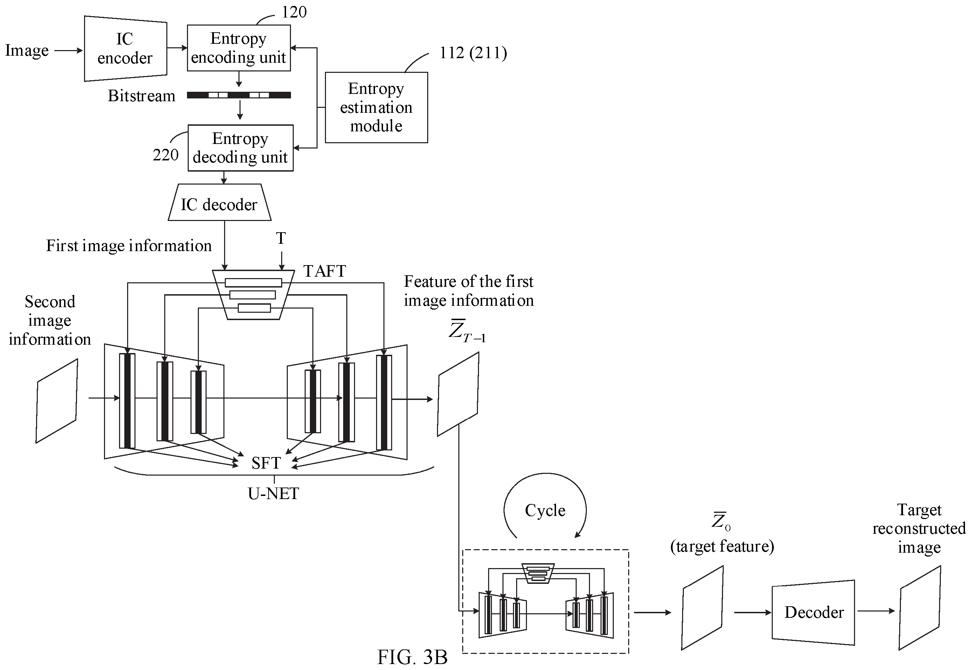

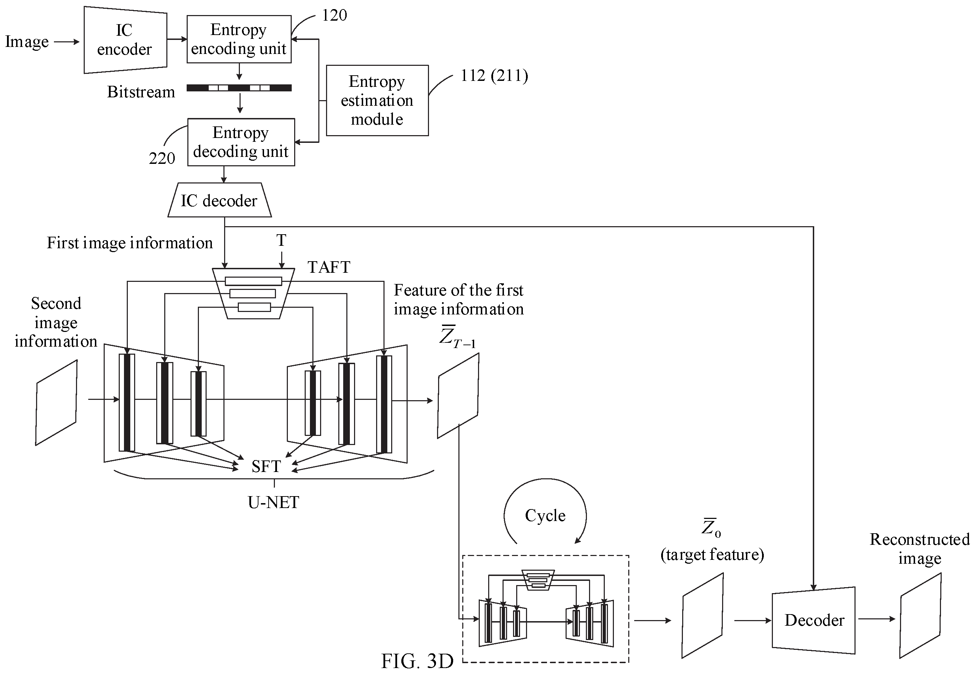

Refer to FIG. 3B or FIG. 3D. For example, in a possible manner, entropy decoding may be performed on the first bitstream, to obtain the side information feature of the image, entropy decoding is performed on the second bitstream based on the side information feature of the image, to obtain the feature map of the image, the feature map of the image is decoded, to obtain an initial reconstructed image and/or a decoding feature of the initial reconstructed image, and the initial reconstructed image and/or the decoding feature of the initial reconstructed image are/is used as the first image information. For a manner of obtaining the side information feature of the image and the feature map of the image, refer to the foregoing descriptions. Details are not described herein again. For example, the feature map of the image may be input to an IC decoder, and the IC decoder decodes the feature map of the image, to output the initial reconstructed image. A feature is generated in a process in which the IC decoder decodes the feature map of the image. In this case, the feature generated in the process in which the IC decoder decodes the feature map of the image may be referred to as a decoding feature of the initial reconstructed image. It should be understood that, in the process of decoding the feature map of the image, the IC decoder may perform only some steps (the initial reconstructed image may be output by performing all steps). In this case, the decoding feature of the initial reconstructed image may still be obtained.

It should be noted that, in this application, at least one of the feature map of the image, the side information feature of the image, the initial reconstructed image, or the decoding feature of the initial reconstructed image may be used as the first image information.

S403: Perform feature transformation on the first image information, to obtain a feature of the first image information.

For example, when the first image information includes at least two of the feature map of the image, the side information feature of the image, the initial reconstructed image, or the decoding feature of the initial reconstructed image, the at least two types of information may be fused (for example, weighted calculation) and then input to a TAFT, or the at least two types of information may be used as at least two types of input information and input to the TAFT. This is not limited in this application.

Refer to any diagram in FIG. 3A to FIG. 3D. The first image information and time information t may be input to the TAFT, and the TAFT performs feature transformation on the first image information, to output the feature of the first image information.

Based on the descriptions of the foregoing training process, a value of the time information t may range from 0 to T. In an order from T to 1, each time one piece of time information may be selected (that is, T is selected for the first time, T-1 is selected for the second time, T-2 is selected for the third time, and so on, until t is equal to 1), and input to the TAFT with the first image information, to obtain a feature that is of the first image information, that corresponds to the time information, and that is output by the TAFT. One piece of time information corresponds to one feature or a plurality of features of the first image information, and the plurality of features of the first image information corresponding to the piece of time information have different scales. For example, in any diagram in FIG. 3A to FIG. 3D, one piece of time information corresponds to three features of the first image information, and the three features have different scales.

S404: Input second image information to a diffusion model, to obtain a target feature, where the feature of the first image information is used to adjust an intermediate feature generated in a process in which the diffusion model performs feature generation processing, and the second image information includes one of a preset noise image, an initial reconstructed image determined based on the bitstream, or an image obtained through noise addition based on the initial reconstructed image.

For example, the second image information may be determined, the second image information and the time information t are input to a diffusion model 214, and the feature of the first image information is input to a second feature transformation model 213. The diffusion model 214 performs feature generation processing on the second image information based on the time information, and the second feature transformation model 213 performs feature transformation on the feature of the first image information, to output a feature adjustment parameter (including a first feature adjustment parameter and a second feature adjustment parameter). In addition, in a process in which the diffusion model 214 performs feature generation processing, an adjustment module adjusts, by using the feature adjustment parameter, an intermediate feature generated in the process in which the diffusion model 214 performs feature generation processing. Then, the diffusion model 214 continues to perform feature generation processing based on an adjusted feature, to output the target feature.

The following example is used for description: A network structure in a denoising process of the diffusion model 214 is a U-NET, and the second feature transformation model 213 is an SFT. Initially, T may be selected as the value of the time information t and input to the U-NET, the second image information is input to the U-NET, and the U-NET performs feature generation processing on the second image information. In addition, in a process in which the U-NET performs feature generation processing on the second image information, a feature adjustment parameter determined based on a feature of the first image information corresponding to a moment t that is equal to T (that is, a feature of the first image information corresponding to a $T^{th}$ piece of time information) is used to adjust an intermediate feature generated in the process in which the U-NET performs feature generation processing, to obtain an adjusted feature (for a specific adjustment manner, refer to Formula (2) and Formula (5). Details are not described herein again). Then, the U-NET continues to perform feature generation processing based on the adjusted feature, to output predicted noise of a $(T-1)^{th}$ piece of time information; and then determines, based on the predicted noise of the $(T-1)^{th}$ piece of time information according to Formula (6) and Formula (7), a feature of the $(T-1)^{th}$ piece of time information (namely, $Z_{T-1}$ in FIG. 3A, FIG. 3B, FIG. 3C, and FIG. 3D, that is, a predicted feature of the $(T-1)^{th}$ piece of time information).

Then, 1 is subtracted from t, and the following steps are cyclically performed until t is equal to 1: A $t^{th}$ piece of time information and a feature of the $t^{th}$ piece of time information are input to the U-NET, and the U-NET performs feature generation processing on the feature of the $t^{th}$ piece of time information. In addition, in a process in which the U-NET performs feature generation processing on the feature of the $t^{th}$ piece of time information, a feature adjustment parameter determined based on a feature of the first image information corresponding to a moment t (that is, a feature of the first image information corresponding to the $t^{th}$ piece of time information) is used to adjust an intermediate feature generated in the process in which the U-NET performs feature generation processing, to obtain an adjusted feature. Next, the U-NET continues to perform feature generation processing based on the adjusted feature, to output predicted noise of a $(t-1)^{th}$ piece of time information; and then determines, based on the predicted noise of the $(t-1)^{th}$ piece of time information according to Formula (6) and Formula (7), a feature of the $(t-1)^{th}$ piece of time information, and subtracts 1 from t. In this way, after T-1 cycles, when t is equal to 1, a feature of a $(t-1)^{th}$ piece of time information is a target feature (namely, $\overline{Z}_0$ in FIG. 3A, FIG. 3B, FIG. 3C, and FIG. 3D, that is, a predicted feature of a $0^{th}$ piece of time information).

S405: Perform reconstruction processing on the target feature, to obtain a target reconstructed image.

Refer to FIG. 3A or FIG. 3B. For example, in a possible manner, the target feature may be input to a decoder, and the decoder performs reconstruction processing on the target feature, to obtain the target reconstructed image. In this case, in this application, there is no need to train the decoder obtained by training an image generation model.

Refer to FIG. 3C or FIG. 3D. For example, in a possible manner, the target feature and at least one of the feature map of the image, the side information feature of the image, and the decoding feature of the initial reconstructed image in the first image information may be input to a decoder, to obtain the target reconstructed image. In this case, in this application, the decoder obtained by training an image generation model may be trained. Specifically, training image information (including a feature map of a training image, a side information feature of the training image, an initial reconstructed image of the training image, and a decoding feature of the initial reconstructed image of the training image) may be determined, and then S403 and S404 are performed, to determine a corresponding feature (referred to as a fourth feature for ease of description). The fourth feature and at least one of the feature map of the training image, the side information feature of the training image, and the initial reconstructed image of the training image are input to the decoder, to obtain a target reconstructed image of the training image. Then, the training image may be compared with the target reconstructed image of the training image, to determine a loss value. Back propagation is performed on the decoder based on the loss value.

For example, in a possible manner, at least one of the feature map of the image, the side information feature of the image, and the decoding feature of the initial reconstructed image in the first image information may be input to a third feature transformation model, to obtain a feature 1. The feature 1 and the target feature are input to a fusion model, to obtain a feature 2. The feature 2 is input to a decoder, to obtain the target reconstructed image. In this case, in this application, there is no need to train the decoder obtained by training an image generation model, and only the third feature transformation model and the fusion model need to be trained. For details, refer to a process of training the decoder. Details are not described herein again.

It should be noted that S401 to S405 are all steps in the decoding process.

Because processing by the TAFT, the SFT, and the U-NET introduces an error and weakens the original feature and the detail feature included in the first image information, the first image information is more accurate than the target feature. Further, the first image information is also input to the decoder, so that a balance between detail richness and fidelity of the target reconstructed image can be achieved.

First, in some conventional technology, a feature map of an image obtained from a bitstream through entropy decoding is directly input to an image decoder for decoding, to obtain a reconstructed image. In this application, a feature of first image information (including a feature map of an image) obtained from a bitstream is first determined, then a diffusion model 214 is used to perform feature generation processing on second image information, to obtain a target feature, the feature of the first image information is used to adjust an intermediate feature generated in a process in which the diffusion model performs feature generation processing, and then a decoder (the decoder is different from the image decoder) is used to perform reconstruction processing on the target feature, to obtain a reconstructed image (that is, a target reconstructed image). Because the diffusion model 214 learns common image information (for example, texture information) in a training process, the diffusion model 214 has a stronger generation capability than the image decoder in the conventional technology. Therefore, the diffusion model 214 requires less information in a reconstruction process. Further, in a case of same subjective quality, less information is carried in the bitstream in this application. In other words, in a case of a same bitstream size, subjective quality of the reconstructed image obtained by using the decoding method in this application is better.

Second, in some conventional technology, an initial reconstructed image is used as a control condition for adjusting an intermediate feature generated in a process in which a diffusion model 214 performs feature generation processing. In other words, the diffusion model 214 in the conventional technology operates in an image domain. In this application, the feature of the first image information is used as a control condition for adjusting the intermediate feature generated in the process in which the diffusion model 214 performs feature generation processing. In other words, the diffusion model 214 in this application operates in a feature domain. Because a scale in the feature domain is less than a scale in the image domain, this application can reduce complexity of calculation of the diffusion model 214, to improve efficiency of the decoding process (the scale is scale, and may be understood as a size, and features of a plurality of scales may be obtained by performing downsampling with a plurality of factors on one image).

Third, in the field of image super-resolution, in some conventional technology, a stable diffusion (Stable Diffusion, SD) model is used for super resolution. The stable diffusion model may include a time-aware feature transformer (Time-Aware Feature Transformer, TAFT) network, a spatial feature transformation (spatial feature transformation, SFT) network, a U-NET, an encoder (Encoder), and a decoder (Decoder). In a super-resolution process, a low-resolution image is input to the encoder, to obtain a first feature; then the first feature is input to the TAFT, to obtain a second feature; then the second feature and a preset noise image are input to a generation model (including the U-NET and the SFT), to obtain a third feature; and next, the third feature is input to the decoder, to obtain a high-resolution image. First, in the conventional technology, the image is input to the encoder, and then the feature output by the encoder is input to the TAFT. In this application, in the decoding process, the feature of the first image information is determined after the first image information is obtained from the bitstream (for example, the first image information may be input to a first feature transformation model 212, such as a TAFT). In other words, the encoder is not used in the decoding process in this application. Second, in the conventional technology, the first feature and the third feature belong to a same domain (that is, dimensions of the first feature are the same as dimensions of the third feature, and each dimension has a same physical meaning; for example, the dimensions of the first feature are m1*m2, and the dimensions of the third feature are m1*m2, where m1 and m2 are positive integers). In other words, the first feature matches the decoder. In other words, a reconstructed image may be obtained by inputting only the first feature to the decoder. In this application, the feature of the first image information and the target feature belong to different domains (that is, dimensions of the feature of the first image information are different from dimensions of the target feature, and each dimension has a different physical meaning; for example, the dimensions of the feature of the first image information are m3*m4, and the dimensions of the target feature are m5*m6, where m3 to m6 are positive integers, and m3 is not equal to m5 or m4 is not equal to m6). In other words, the feature of the first image information does not match the decoder. In other words, a reconstructed image cannot be obtained by inputting only the feature of the first image information to the decoder.

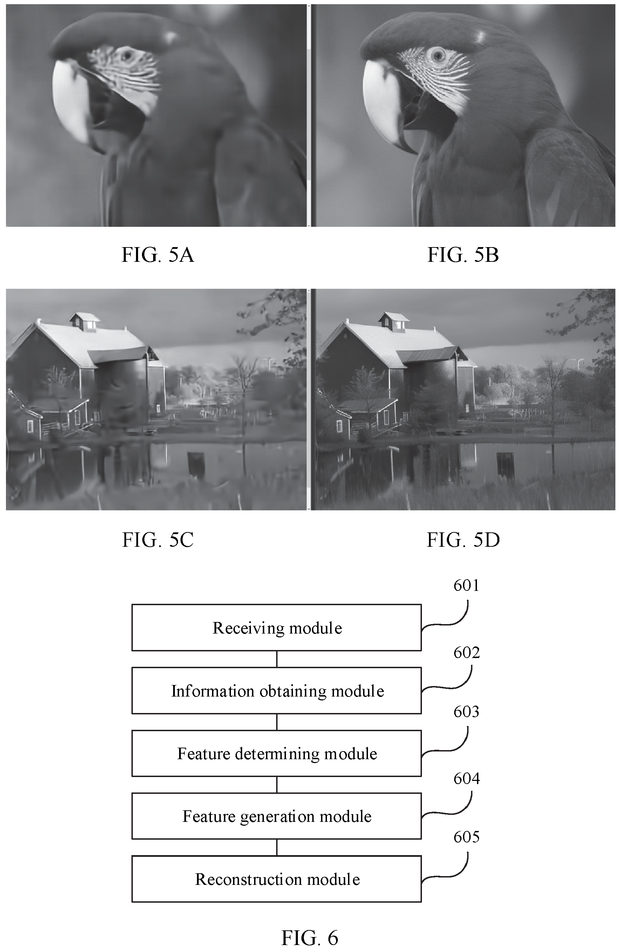

FIG. 5A and FIG. 5B are diagrams of examples of reconstructed images.

FIG. 5A shows a reconstructed image obtained by using a decoding method in the conventional technology. FIG. 5B shows a reconstructed image (that is, a target reconstructed image) obtained by using the decoding method in this application. A comparison between FIG. 5A and FIG. 5B shows that texture is finer and details are clearer in FIG. 5B. In other words, subjective quality in FIG. 5B is better.

FIG. 5C and FIG. 5D are diagrams of examples of reconstructed images.

FIG. 5C shows a reconstructed image obtained by using a decoding method in the conventional technology. FIG. 5D shows a reconstructed image (that is, a target reconstructed image) obtained by using the decoding method in this application. A comparison between FIG. 5C and FIG. 5D shows that texture is finer and details are clearer in FIG. 5D. In other words, subjective quality in FIG. 5D is better.

FIG. 6 is a diagram of an example of an apparatus for decoding an image. The apparatus for decoding the image may be configured to perform the method in the foregoing embodiments. Therefore, for beneficial effects that can be achieved, refer to the beneficial effects of the corresponding method provided above. Details are not described herein again.

Refer to FIG. 6. The apparatus for decoding the image may include:

a receiving module 601, configured to receive a bitstream;

an information obtaining module 602, configured to obtain first image information based on the bitstream;

a feature determining module 603, configured to perform feature transformation on the first image information, to obtain a feature of the first image information;

a feature generation module 604, configured to input second image information to a diffusion model 214, to obtain a target feature, where the feature of the first image information is used to adjust an intermediate feature generated in a process in which the diffusion model 214 performs feature generation processing, and the second image information includes one of a preset noise image, an initial reconstructed image determined based on the bitstream, or an image obtained through noise addition based on the initial reconstructed image; and

a reconstruction module 605, configured to perform reconstruction processing on the target feature, to obtain a target reconstructed image.

For example, the reconstruction module 605 is configured to perform reconstruction processing on the first image information and the target feature, to obtain the target reconstructed image.

For example, the reconstruction module 605 is specifically configured to input the first image information and the target feature to a first decoding network 216, to obtain the target reconstructed image.

For example, that the feature determining module 603 is specifically configured to determine the feature of the first image information includes: inputting the first image information and time information to a first feature transformation model 212, to obtain the feature of the first image information.

For example, the feature of the first image information corresponds to a plurality of pieces of time information, one of the plurality of pieces of time information corresponds to one feature or a plurality of features of the first image information, and the plurality of features of the first image information have different scales.

For example, the feature generation module 604 is specifically configured to: input a $t^{th}$ piece of time information and the second image information to the diffusion model 214, to obtain a feature of a $(t-1)^{th}$ piece of time information, where an initial value of t is T, and T is a positive integer; and subtract 1 from t, and cyclically perform the following steps until t is equal to 1: inputting the $t^{th}$ piece of time information and a feature of the $t^{th}$ piece of time information to the diffusion model 214, to obtain the feature of the $(t-1)^{th}$ piece of time information, and subtracting 1 from t. The feature of the first image information corresponds to the plurality of pieces of time information, a feature of the first image information corresponding to the $t^{th}$ piece of time information is used to adjust an intermediate feature generated in a process in which the diffusion model 214 generates the feature of the $(t-1)^{th}$ piece of time information, and when t is equal to 1, the feature of the $(t-1)^{th}$ piece of time information is the target feature.

For example, the apparatus for decoding the image further includes a feature adjustment module.

The feature adjustment module is configured to: input the feature of the first image information to a second feature transformation model 213, to obtain a feature adjustment parameter; and adjust, based on the feature adjustment parameter, the intermediate feature generated in the process in which the diffusion model 214 performs feature generation processing.

For example, the feature adjustment parameter includes a first feature adjustment parameter and a second feature adjustment parameter, and that the feature adjustment module is specifically configured to adjust, based on the feature adjustment parameter, the intermediate feature generated in the process in which the diffusion model 214 performs feature generation processing includes: determining a product of the first feature adjustment parameter and the intermediate feature generated in the process in which the diffusion model 214 performs feature generation processing; determining a sum of the product and the second feature adjustment parameter; and determining an adjusted intermediate feature based on the sum.

For example, the feature adjustment module is specifically configured to add the sum to the intermediate feature generated in the process in which the diffusion model 214 performs feature generation processing, to obtain the adjusted intermediate feature.

For example, the first image information includes at least one of a feature map of the image, a side information feature of the image, the initial reconstructed image, or a decoding feature of the initial reconstructed image.

The feature map of the image and the side information feature of the image are obtained by an entropy decoding unit 220 by performing entropy decoding on the bitstream, the initial reconstructed image is obtained by a second decoding network 215 by decoding the feature map of the image, and the decoding feature of the initial reconstructed image is a feature generated in a process in which the second decoding network 215 decodes the feature map of the image.

For example, the information obtaining module 602 is specifically configured to: input a first bitstream to the entropy decoding unit 220, to obtain the side information feature of the image, and use the side information feature of the image as the first image information; and/or

input the first bitstream to the entropy decoding unit 220, to obtain the side information feature of the image, input the side information feature of the image and a second bitstream to the entropy decoding unit 220, to obtain the feature map of the image, and use the feature map of the image as the first image information; and/or

input the first bitstream to the entropy decoding unit 220, to obtain the side information feature of the image, input the side information feature of the image and the second bitstream to the entropy decoding unit 220, to obtain the feature map of the image, input the feature map of the image to the second decoding network 215, to obtain the initial reconstructed image and/or the decoding feature of the initial reconstructed image, and use the initial reconstructed image and/or the decoding feature of the initial reconstructed image as the first image information.

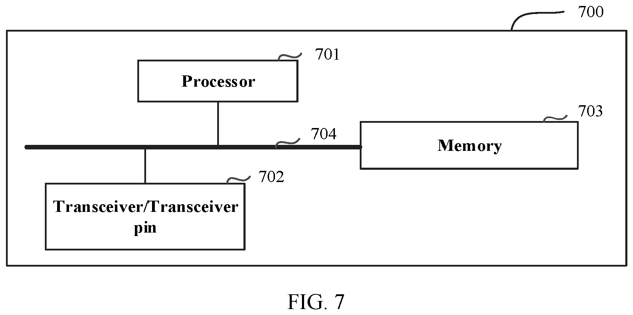

In an example, FIG. 7 is a block diagram of an apparatus 700 according to an embodiment of this application. The apparatus 700 may include a processor 701 and a transceiver/transceiver pin 702, and optionally, further include a memory 703.

Components of the apparatus 700 are coupled together through a bus 704. In addition to a data bus, the bus 704 further includes a power bus, a control bus, and a status signal bus. However, for clear description, various buses are referred to as the bus 704 in the figure.

Optionally, the memory 703 may be configured to store instructions in the foregoing method embodiments. The processor 701 may be configured to: execute the instructions in the memory 703, control a receiving pin to receive a signal, and control a sending pin to send a signal.

The apparatus 700 may be the electronic device in the foregoing method embodiments or a chip of the electronic device.

All related content of the steps in the foregoing method embodiments may be cited in function descriptions of corresponding functional modules. Details are not described herein again.

An embodiment of this application further provides a chip, including one or more interface circuits and one or more processors. The one or more processors receive or send data through the one or more interface circuits. When the one or more processors execute computer instructions, the foregoing related method steps for implementing the steps of the method in the foregoing embodiments are performed. The interface circuit is the transceiver/transceiver pin 702.

An embodiment further provides a computer-readable storage medium. The computer-readable storage medium stores computer instructions. When the computer instructions are run on an electronic device, the electronic device is enabled to perform the foregoing related method steps, to implement the method in the foregoing embodiments.

An embodiment further provides a computer program product. The computer program product includes computer instructions. When the computer instructions are executed by a computer or a processor, the computer is enabled to perform the foregoing related steps, to implement the method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the descriptions of the foregoing implementations, a person skilled in the art may understand that, for a purpose of convenient and brief description, division into the foregoing functional modules is used as an example for illustration. During actual application, the foregoing functions may be allocated to different functional modules and implemented according to requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed in different places. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

Any content in embodiments of this application and any content in a same embodiment can be freely combined. Any combination of the foregoing content falls within the scope of this application.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the method in embodiments of this application. The foregoing storage medium includes various media that can store program code, such as a USB flash drive, a removable hard disk, a read-only memory (read-only memory, ROM), a random access memory (random access memory, RAM), a magnetic disk, or an optical disc.

Methods or algorithm steps described with reference to the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, the storage medium is coupled to the processor, so that the processor can read information from the storage medium and write information to the storage medium. Certainly, the storage medium may alternatively be a component of the processor. The processor and the storage medium may be located in an ASIC.

A person skilled in the art should be aware that in the foregoing one or more examples, functions described in embodiments of this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any usable medium accessible to a general-purpose computer or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

**Claims**

1. A method for decoding an image, wherein the method comprises:

   receiving a bitstream;
   obtaining first image information based on the bitstream;
   performing feature transformation on the first image information, to obtain a feature of the first image information;
   inputting second image information to a diffusion model, to obtain a target feature, wherein the second image information comprises one of a preset noise image, an initial reconstructed image determined based on the bitstream, or an image obtained through noise addition based on the initial reconstructed image, and the feature of the first image information is used to adjust an intermediate feature generated in a process in which the diffusion model performs feature generation processing; and
   performing reconstruction processing on the target feature, to obtain a target reconstructed image.

2. The method according to claim 1, wherein performing reconstruction processing on the target feature, to obtain the target reconstructed image comprises:
   performing reconstruction processing on the first image information and the target feature, to obtain the target reconstructed image.

3. The method according to claim 2, wherein performing reconstruction processing on the first image information and the target feature, to obtain the target reconstructed image comprises:

inputting the first image information and the target feature to a first decoding network, to obtain the target reconstructed image.

4. The method according to any one of claims 1 to 3, wherein performing feature transformation on the first image information, to obtain the feature of the first image information comprises:
inputting the first image information and time information to a first feature transformation model, to obtain the feature of the first image information.

5. The method according to any one of claims 1 to 4, wherein the feature of the first image information corresponds to a plurality of pieces of time information, one of the plurality of pieces of time information corresponds to one feature or a plurality of features of the first image information, and the plurality of features of the first image information have different scales.

6. The method according to claim 5, wherein inputting the second image information to the diffusion model, to obtain the target feature comprises:

inputting a $t^{th}$ piece of time information and the second image information to the diffusion model, to obtain a feature of a $(t-1)^{th}$ piece of time information, wherein an initial value of t is T, and T is a positive integer; and subtracting 1 from t, and cyclically performing the following steps until t is equal to 1:

inputting the $t^{th}$ piece of time information and a feature of the $t^{th}$ piece of time information to the diffusion model, to obtain the feature of the $(t-1)^{th}$ piece of time information, and subtracting 1 from t, wherein the feature of the first image information corresponds to the plurality of pieces of time information, a feature of the first image information corresponding to the $t^{th}$ piece of time information is used to adjust an intermediate feature generated in a process in which the diffusion model generates the feature of the $(t-1)^{th}$ piece of time information, and when t is equal to 1, the feature of the $(t-1)^{th}$ piece of time information is the target feature.

7. The method according to any one of claims 1 to 6, wherein the method further comprises:

inputting the feature of the first image information to the second feature transformation model, to obtain a feature adjustment parameter; and
adjusting, based on the feature adjustment parameter, the intermediate feature generated in the process in which the diffusion model performs feature generation processing.

8. The method according to claim 7, wherein the feature adjustment parameter comprises a first feature adjustment parameter and a second feature adjustment parameter, and adjusting, based on the feature adjustment parameter, the intermediate feature generated in the process in which the diffusion model performs feature generation processing comprises:

determining a product of the first feature adjustment parameter and the intermediate feature generated in the process in which the diffusion model performs feature generation processing;
determining a sum of the product and the second feature adjustment parameter; and
determining an adjusted intermediate feature based on the sum.

9. The method according to claim 8, wherein determining the adjusted intermediate feature based on the sum comprises:
adding the sum to the intermediate feature generated in the process in which the diffusion model performs feature generation processing, to obtain the adjusted intermediate feature.

10. The method according to any one of claims 1 to 9, wherein

the first image information comprises at least one of a feature map of the image, a side information feature of the image, the initial reconstructed image, or a decoding feature of the initial reconstructed image; and
the feature map of the image and the side information feature of the image are obtained by an entropy decoding unit by performing entropy decoding on the bitstream, the initial reconstructed image is obtained by a second decoding network by decoding the feature map of the image, and the decoding feature of the initial reconstructed image is a feature generated in a process in which the second decoding network decodes the feature map of the image.

**11.** The method according to any one of claims 1 to 10, wherein the bitstream comprises a first bitstream and a second bitstream, and obtaining the first image information based on the bitstream comprises:

inputting the first bitstream to the entropy decoding unit, to obtain the side information feature of the image, and using the side information feature of the image as the first image information; and/or
inputting the first bitstream to the entropy decoding unit, to obtain the side information feature of the image, inputting the side information feature of the image and the second bitstream to the entropy decoding unit, to obtain the feature map of the image, and using the feature map of the image as the first image information; and/or
inputting the first bitstream to the entropy decoding unit, to obtain the side information feature of the image, inputting the side information feature of the image and the second bitstream to the entropy decoding unit, to obtain the feature map of the image, inputting the feature map of the image to the second decoding network, to obtain the initial reconstructed image and/or the decoding feature of the initial reconstructed image, and using the initial reconstructed image and/or the decoding feature of the initial reconstructed image as the first image information.

**12.** An apparatus for decoding an image, wherein the apparatus for decoding the image comprises an entropy decoding unit, a first feature transformation model, a diffusion model, and a first decoding network;

the entropy decoding unit is configured to perform entropy decoding on a received bitstream, to obtain first image information;
the first feature transformation model is configured to perform feature transformation on the first image information, to obtain a feature of the first image information;
the diffusion model is configured to perform feature generation processing on second image information, to obtain a target feature, wherein the second image information comprises one of a preset noise image, an initial reconstructed image determined based on the bitstream, or an image obtained through noise addition based on the initial reconstructed image, and the feature of the first image information is used to adjust an intermediate feature generated in a process in which the diffusion model performs feature generation processing; and
the first decoding network is configured to perform reconstruction processing on the target feature, to obtain a target reconstructed image.

**13.** The apparatus according to claim 12, wherein
the first decoding network is specifically configured to perform reconstruction processing on the first image information and the target feature, to obtain the target reconstructed image.

**14.** The apparatus according to claim 12 or 13, wherein the apparatus for decoding the image further comprises a second feature transformation model; and
the second feature transformation model is configured to perform feature transformation on the feature of the first image information, to obtain a feature adjustment parameter, wherein the feature adjustment parameter is used to adjust the intermediate feature generated in the process in which the diffusion model performs feature generation processing.

**15.** The apparatus according to claim 12 or 13, wherein the first image information comprises at least one of a feature map of the image or a side information feature of the image, and the feature map of the image or the side information feature of the image is output information of the entropy decoding unit.

**16.** The apparatus according to any one of claims 12 to 14, wherein the apparatus for decoding the image further comprises a second decoding network;

the second decoding network is configured to decode a feature map of the image; and
the feature map of the image is output information of the entropy decoding unit, the first image information comprises at least one of the initial reconstructed image and a decoding feature of the initial reconstructed image, the initial reconstructed image is output information of the second decoding network, and the decoding feature of the initial reconstructed image is a feature generated in a process in which the second decoding network decodes the feature map of the image.

**17.** An apparatus for decoding an image, wherein the apparatus for decoding the image comprises:

a receiving module, configured to receive a bitstream;
an information obtaining module, configured to obtain first image information based on the bitstream;

a feature determining module, configured to perform feature transformation on the first image information, to obtain a feature of the first image information;

a feature generation module, configured to input second image information to a diffusion model, to obtain a target feature, wherein the second image information comprises one of a preset noise image, an initial reconstructed image determined based on the bitstream, or an image obtained through noise addition based on the initial reconstructed image, and the feature of the first image information is used to adjust an intermediate feature generated in a process in which the diffusion model performs feature generation processing; and

a reconstruction module, configured to perform reconstruction processing on the target feature, to obtain a target reconstructed image.

18. A decoding apparatus, comprising:

a memory and a processor, wherein the memory is coupled to the processor; and
the memory stores program instructions, and when the program instructions are executed by the processor, the decoding apparatus is enabled to perform the method for decoding the image according to any one of claims 1 to 11.

19. A coding apparatus, comprising one or more interface circuits and one or more processors, wherein the one or more processors receive or send data through the one or more interface circuits, and when the one or more processors execute computer instructions, the steps of the method according to any one of claims 1 to 11 are performed.

20. A computer-readable storage medium, wherein the computer-readable storage medium stores a computer program, and when the computer program is run on a computer or a processor, the computer or the processor is enabled to perform the method for decoding the image according to any one of claims 1 to 11.

21. A computer program product, wherein the computer program product comprises computer instructions, and when the computer instructions are executed by a computer or a processor, the steps of the method according to any one of claims 1 to 11 are performed.

FIG. 1A

Image

Camera →

AI encoding module — 100

AI encoding unit — 110 → Entropy encoding unit — 120

File storage module

Compression process

- - - - - - - - - - - - - - - - - - - - - - - - - - - - - -

Decompression process

File

210 — AI decoding unit ← 220 — Entropy decoding unit ← File loading module

AI decoding module — 200

Reconstructed image

FIG. 1B

FIG. 1C

FIG. 2A

EP 4 783 587 A1

EP 4 783 587 A1

FIG. 2B

Training image

IC encoder

Loss1

112 (211)

Entropy estimation module

Feature map of the training image

Loss2

Reconstructed image

IC decoder

FIG. 2C

FIG. 2D

Block 1 of an SFT

Network layer 1
of a U-NET

Network layer 2
of the U-NET

Intermediate
feature

Adjusted intermediate
feature

Feature
adjustment
parameter

Adjustment
module

FIG. 2E

FIG. 3A

FIG. 3B

FIG. 3C

FIG. 3D

FIG. 3E

FIG. 4

FIG. 5A

FIG. 5B

FIG. 5C

FIG. 5D

FIG. 6

FIG. 7

## INTERNATIONAL SEARCH REPORT

| International application No. |
|---|
| **PCT/CN2024/117241** |

**A.    CLASSIFICATION OF SUBJECT MATTER**

H04N21/234(2011.01)i;  H04N19/00(2014.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, USTXT, EPTXT, JPTXT, WOTXT, DWPI, CNKI, IEEE, ISI Web of Science, 必应, BING: 解码, 解压缩, 扩散, 模型, 重构, 重建, 恢复, 噪声, 噪音, 特征, decode, diffusion, model, reconstruct, rebuild, restore, noise, feature

**C.    DOCUMENTS CONSIDERED TO BE RELEVANT**

| Category* | Citation of document, with indication, where appropriate, of the relevant passages | Relevant to claim No. |
|---|---|---|
| A | CN 116402719 A (NANJING UNIVERSITY OF POSTS AND TELECOMMUNICATIONS) 07 July 2023 (2023-07-07) claims 1-8, description, paragraphs [0035]-[0061], and figures 1-2 | 1-21 |
| A | CN 114554205 A (HUAWEI TECHNOLOGIES CO., LTD. et al.) 27 May 2022 (2022-05-27) entire document | 1-21 |
| A | CN 116524048 A (NANKAI UNIVERSITY) 01 August 2023 (2023-08-01) entire document | 1-21 |
| A | CN 114693811 A (HUAWEI TECHNOLOGIES CO., LTD.) 01 July 2022 (2022-07-01) entire document | 1-21 |
| A | US 2018255320 A1 (SONY CORP.) 06 September 2018 (2018-09-06) entire document | 1-21 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 November 2024** | **21 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/117241**

| Patent document cited in search report | | | Publication date (day/month/year) | Patent family member(s) | | | Publication date (day/month/year) |
|---|---|---|---|---|---|---|---|
| CN | 116402719 | A | 07 July 2023 | None | | | |
| CN | 114554205 | A | 27 May 2022 | CN | 114554205 | B | 10 March 2023 |
| CN | 116524048 | A | 01 August 2023 | None | | | |
| CN | 114693811 | A | 01 July 2022 | None | | | |
| US | 2018255320 | A1 | 06 September 2018 | US | 10728578 | B2 | 28 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311292210